# EUROPEAN PATENT SPECIFICATION

(11) **EP 2 878 523 B1**
(45) Date of publication and mention of the grant of the patent: **13.04.2016**
(21) Application number: 14179950.2
(22) Date of filing: 06.08.2014
(51) Int. Cl.: B62J 6/04, B62K 19/46

(54) **Straddle-type vehicle**
Grätschsitz-Fahrzeug
Véhicule du type monté à califourchon

(30) Priority: 29.11.2013 JP 2013246919
(43) Date of publication of application: 03.06.2015
(73) Proprietor: Yamaha Hatsudoki Kabushiki Kaisha, Iwata-shi, Shizuoka 438-8501 (JP)
(72) Inventor: Ohtsubo, Yasuyuki, Iwata-shi, Shizuoka 438-8501 (JP); Kodama, Ayumu, Iwata-shi, Shizuoka 438-8501 (JP)
(74) Representative: Grünecker Patent- und Rechtsanwälte PartG mbB

(56) References cited:
- EP-A1- 1 790 557
- EP-A2- 1 245 442
- US-A1- 2007 216 524

## Description

The present invention relates to a straddle-type vehicles according to the preamble of independent claim 1. Such a straddle-type vehicle can be taken from the prior art document EP 1 245 442 A2.

Prior art document US 2007/216524 A1 discloses a rear light assembly for a straddle type vehicle that enhances illumination of the rear side of the vehicle while also allowing the rider sufficient cargo space in the trunk of the vehicle. The rear light assembly can comprise a movable cover on the trunk space, a first light unit extending in a generally horizontal direction, and a second light unit extending in a generally vertical direction. The assembly can also include two vertical light units, one positioned on the left side of the movable cover and the other positioned on the right side of the movable cover, and one horizontal light positioned below the movable cover. Connectors and fastening mechanisms can be utilized to connect the light units and movable cover of the assembly. In addition, the first light unit and the second light unit can both be a light-emitting diode (LED) light source.

Prior art document EP 1 790 557 A1 relates to a motorcycle, in particular motor scooter, comprising a battery accommodating structure, in which a battery case for accommodating a battery is disposed in an inner space of a rear housing member of the motorcycle, and wherein a battery case cover for opening and closing the battery case is formed on the rear housing member at a position corresponding to the battery case.

A demand for more compact straddle-type vehicles such as motorcycles is considerably higher than a demand for more compact automobiles. JP 2012-240425 A discloses a motorcycle whose vehicle rear portion is made compact. This motorcycle includes: a seat on which a rider sits; and side covers disposed below the seat. In a side view of the vehicle, a lower edge of a rear portion of each side cover is located above a rear wheel. Thus, in this motorcycle, the lower edge of the rear portion of each side cover is disposed at a high position, so that a dimension of the vehicle rear portion in a vertical direction is small. In this motorcycle, a dimension of the vehicle rear portion in a vehicle width direction is also small. At the vehicle rear portion of the motorcycle, a left rear flasher, a tail light and a right rear flasher are disposed in alignment with each other in the vehicle width direction.

It is known that a straddle-type vehicle is provided with a storage portion in its vehicle rear portion. A straddle-type vehicle disclosed in JP 5-7230 B includes a storage portion that includes: an openable and closable lid disposed below a seat and above a tail light in a rear view of the vehicle; and a storage member disposed inside the openable and closable lid.

In the motorcycle disclosed in JP 2012-240425 A, the dimension of the vehicle rear portion in the vehicle width direction is undesirably increased if the tail light and/or the rear flashers are/is increased in size without changing a positional relationship between the tail light and the rear flashers. Hence, it is difficult to increase the tail light and/or the rear flashers in size while maintaining compactness of the vehicle rear portion in the vehicle width direction. When an attempt is made to use the storage portion of JP 5-7230 B in the motorcycle of JP 2012-240425 A, an openable and closable lid has to be provided below the seat and above the tail light. In addition, a hinge mechanism for opening and closing the openable and closable lid must be provided in the vehicle rear portion. Consequently, it is difficult to provide the storage portion while maintaining compactness of the vehicle rear portion.

It is an object of the present invention to provide a straddle-type vehicle which allows a tail light and/or rear flashers to be increased in size while ensuring compactness of a rear portion of the vehicle, and in which a storage member having a sufficient capacity is provided in the rear portion of the vehicle.

According to the present invention said object is solved by a straddle-type vehicle having the features of independent claim 1. Further preferred embodiments are laid down in the dependent claims.

A straddle-type vehicle according to a preferred embodiment includes: an openable and closable seat; a rear wheel disposed below the seat; a storage member which includes an opening and at least a portion of which is disposed below the seat and above the rear wheel; a body cover which is disposed below the seat and includes a lower edge at least a portion of which is disposed above an upper end of the rear wheel; a tail light disposed at the body cover; and a left rear flasher and a right rear flasher which are disposed at the body cover. The seat is located over the opening of the storage member when the seat is closed. The seat is not located over at least a portion of the opening of the storage member when the seat is opened. The body cover includes a rear cover disposed above the tail light and between the left rear flasher and the right rear flasher in a rear view of the vehicle. At least a portion of the tail light is disposed below the left rear flasher and the right rear flasher. A left end of the tail light is disposed leftward of a right end of the left rear flasher. A right end of the tail light is disposed rightward of a left end of the right rear flasher. At least a portion of the storage member is disposed so as to be overlapped with the rear cover in a plan view of the vehicle, and overlapped with the left rear flasher and the right rear flasher in a side view of the vehicle.

In the above-described straddle-type vehicle, at least a portion of the lower edge of the body cover is disposed above the upper end of the rear wheel. As a result, a dimension of a rear portion of the straddle-type vehicle in a vehicle vertical direction is smaller than when the entire lower edge of the body cover is disposed below the upper end of the rear wheel.

In the above-described straddle-type vehicle, at least a portion of the tail light is disposed below the left rear flasher and the right rear flasher. The left end of the tail light is disposed leftward of the right end of the left rear flasher, and the right end of the tail light is disposed rightward of the left end of the right rear flasher. Therefore, unlike a case where the left rear flasher, the tail light and the right rear flasher are arranged in alignment with each other in a right-left direction, a dimension of the rear portion of the straddle-type vehicle in a vehicle width direction is reduced while the tail light and/or the rear flashers are/is increased in size.

In the above-described straddle-type vehicle, at least a portion of the storage member is disposed at a position where the storage member overlaps with the rear cover in the plan view of the vehicle and overlaps with the left rear flasher and the right rear flasher in the side view of the vehicle. Thus, the position where the storage member overlaps with the rear cover in the plan view of the vehicle and overlaps with the left rear flasher and the right rear flasher in the side view of the vehicle is effectively utilized as an installation space for the storage member. A capacity of the storage member is increased because at least a portion of the storage member overlaps with the rear cover in the plan view of the vehicle. Furthermore, a dimension of the rear portion of the vehicle in a vehicle front-rear direction is reduced while the capacity of the storage member is ensured. At least a portion of the storage member overlaps with the left rear flasher and the right rear flasher in the side view of the vehicle, and therefore, the dimensions of the rear portion of the vehicle in the vehicle front-rear direction and vertical direction are reduced. As a result, the storage member that is opened and closed by the seat is disposed in the rear portion of the vehicle while compactness of the rear portion of the vehicle in the vehicle width direction, vertical direction and front-rear direction is maintained. A mechanism for opening and closing the rear cover does not have to be provided because the storage member is opened and closed by the seat. Since a mechanism for opening and closing the rear cover is omitted, the rear portion of the straddle-type vehicle is reduced in size.

As mentioned above, at least a portion of the storage member overlaps with the rear cover in the plan view of the vehicle, so that a portion of the storage member is disposed at a relatively rearward position. As also mentioned above, the rear cover is disposed above the tail light in the rear view of the vehicle. If an attempt is made to extend the tail light further upward with the aim of increasing the tail light in area, it is difficult to dispose a rear portion of the storage member at a relatively rearward position in order to prevent interference between the rear portion of the storage member and a front portion of the tail light, and as a result, the capacity of the storage member might be reduced. If the tail light is extended further downward in order to ensure the capacity of the storage member, the dimension of the rear portion of the vehicle in the vehicle vertical direction is undesirably increased. In the above-described straddle-type vehicle, at least a portion of the tail light is disposed below the left rear flasher and the right rear flasher, and therefore, a dimension of the tail light in the vehicle width direction is increased so as to ensure the area of the tail light. In other words, the tail light does not have to be extended further upward or downward. As a result, the tail light is increased in size and the dimension of the rear portion of the vehicle in the vehicle vertical direction is reduced, while the capacity of the storage member is ensured.

Thus, in the above-described straddle-type vehicle, the tail light and/or the rear flashers are/is increased in size and the storage member having a sufficient capacity is provided in the rear portion of the vehicle, while compactness of the rear portion of the vehicle is ensured.

According to one embodiment, a dimension of each of the left rear flasher and the right rear flasher in a vehicle width direction and a dimension of each of the left rear flasher and the right rear flasher in a vehicle vertical direction are each preferably smaller than a dimension of each of the left rear flasher and the right rear flasher in a vehicle front-rear direction.

According to the above-described embodiment, the dimension of each of the left rear flasher and the right rear flasher in the vehicle width direction is smaller than the dimension of each of the left rear flasher and the right rear flasher in the vehicle front-rear direction. Therefore, the dimension of the rear portion of the vehicle in the vehicle width direction is reduced while the sizes of the left rear flasher and the right rear flasher are ensured, although the storage member is disposed between the left rear flasher and the right rear flasher. A dimension of the storage member in the vehicle width direction is increased and thus the capacity of the storage member is sufficiently ensured while compactness of the rear portion of the vehicle is ensured. According to the above-described embodiment, the dimension of each of the left rear flasher and the right rear flasher in the vehicle vertical direction is smaller than the dimension of each of the left rear flasher and the right rear flasher in the vehicle front-rear direction. Therefore, the dimension of the rear portion of the vehicle in the vehicle vertical direction is reduced while the sizes of the left rear flasher and the right rear flasher are ensured. Consequently, according to the above-described embodiment, the dimension of the rear portion of the vehicle in the vehicle width direction and the dimension of the rear portion of the vehicle in the vehicle vertical direction are both further reduced while the capacity of the storage member is ensured.

According to another embodiment, a dimension of each of the left rear flasher and the right rear flasher in a vehicle vertical direction is preferably smaller than a dimension of each of the left rear flasher and the right rear flasher in a vehicle width direction.

According to the above-described embodiment, the dimension of the rear portion of the vehicle in the vertical direction is further reduced while the dimension of the storage member in the vertical direction is ensured. As a result, the rear portion of the vehicle is made more compact while the capacity of the storage member is ensured.

According to still another embodiment, a dimension of the tail light in a vehicle vertical direction is preferably smaller than a dimension of the tail light in a vehicle width direction.

According to the above-described embodiment, the dimension of the rear portion of the vehicle in the vertical direction is further reduced while the capacity of the storage member is ensured.

According to yet another embodiment, the body cover preferably includes: an upper side cover disposed below the seat; and a lower side cover disposed below the upper side cover. The lower side cover is preferably assembled so as to be attachable to and detachable from the upper side cover.

According to the above-described embodiment, a vehicle component disposed inward of the lower side cover is exposed by detaching the lower side cover from the upper side cover. In other words, a vehicle component disposed inward of the lower side cover is exposed without having to detach the entire side cover, i.e., both of the upper and lower side covers. Accordingly, maintenance of a vehicle component disposed inward of the lower side cover is easily performed.

According to still yet another embodiment, an upper end of the tail light is preferably disposed below a lower end of the left rear flasher and a lower end of the right rear flasher in the rear view of the vehicle.

According to the above-described embodiment, a dimension of the rear cover in the vehicle vertical direction is increased. Hence, the dimension of the storage member in the vertical direction is increased. Interference between the tail light and the storage member is unlikely to occur, thus allowing the storage member to extend rearward. As a result, the capacity of the storage member is increased.

According to another embodiment, the left end of the tail light is preferably disposed rightward of a left end of the left rear flasher. The right end of the tail light is preferably disposed leftward of a right end of the right rear flasher.

According to the above-described embodiment, the left rear flasher and the right rear flasher are increased in size.

According to still another embodiment, front ends of the tail light are preferably disposed forward of a rear end of the left rear flasher and a rear end of the right rear flasher.

According to the above-described embodiment, the tail light and the rear flashers are increased in size without having to increase the dimension of the rear portion of the vehicle in the vehicle front-rear direction.

According to yet another embodiment, a rear end of the storage member is preferably disposed rearward of a front end of the tail light.

According to the above-described embodiment, the dimension of the rear portion of the vehicle in the vehicle front-rear direction is reduced while the capacity of the storage member is ensured.

According to still yet another embodiment, the tail light preferably extends obliquely upward and rearward in the side view of the vehicle.

According to the above-described embodiment, the dimension of the tail light in the vehicle vertical direction is reduced while the area of the tail light is ensured. Interference between the tail light and the storage member is more unlikely to occur, thus enabling an increase in the size of the storage member. As a result, the capacity of the storage member is increased and the tail light is increased in size, while compactness of the rear portion of the vehicle is ensured.

According to another embodiment, in the rear view of the vehicle, a right edge of the left rear flasher preferably extends obliquely downward and rightward, and a left edge of the right rear flasher preferably extends obliquely downward and leftward.

According to the above-described embodiment, an upper portion of the storage member is made larger than a lower portion of the storage member. As a result, the opening of the storage member is enlarged.

According to still another embodiment, in the side view of the vehicle, the rear cover preferably includes: a first rear edge that extends obliquely downward and rearward; a second rear edge that extends downward from the first rear edge; and a third rear edge that extends obliquely downward and rearward from the second rear edge. In the side view of the vehicle, a lower end of the first rear edge is preferably located above a line through which a lower end of the third rear edge and an upper end of the third rear edge are connected to each other. As used herein, the term "second rear edge that extends downward from the first rear edge" includes both of the second rear edge that extends obliquely downward from the first rear edge, and the second rear edge that extends vertically downward from the first rear edge.

According to the above-described embodiment, a portion of the rear cover which is located above the storage member bulges outward. Therefore, when the seat is opened, a hand is easily inserted into and removed from the storage member. Consequently, an object is more easily stored in the storage member while compactness of the rear portion of the vehicle is ensured.

According to yet another embodiment, the storage member preferably includes: a bottom plate; a front plate that extends upward from the bottom plate; and a rear plate that extends upward from the bottom plate and is disposed rearward of the front plate.

According to the above-described embodiment, an object is easily stored in the storage member.

According to still yet another embodiment, the rear plate preferably extends obliquely upward and rearward.

According to the above-described embodiment, an object is more easily stored in the storage member.

According to another embodiment, an upper end portion of the rear plate is preferably bent so as to be extended rearward and then downward.

According to the above-described embodiment, the upper end portion of the rear plate is increased in rigidity. Hence, rigidity of the storage member is ensured. Furthermore, when an object is inserted into the storage member, the object or a hand holding the object is unlikely to get caught on the upper end portion of the rear plate. As a result, the object is easily stored in the storage member.

According to still another embodiment, the rear plate preferably overlaps with the rear cover in the plan view of the vehicle.

According to the above-described embodiment, the rear plate is disposed at a relatively rearward position, thus making it possible to increase a gap between the front plate and the rear plate. As a result, the capacity of the storage member is increased.

According to yet another embodiment, at least a portion of the front plate is preferably disposed forward of the rear cover.

According to the above-described embodiment, at least a portion of the front plate does not overlap with the rear cover in the plan view of the vehicle. Hence, when the seat is opened, an object is easily inserted into and removed from the storage member. Furthermore, the capacity of the storage member is increased.

According to still yet another embodiment, the straddle-type vehicle preferably further includes a body frame disposed below the seat and above the rear wheel. The storage member preferably includes a support portion located forward of the front plate and above the bottom plate, the storage member being supported by the body frame via the support portion in a cantilever manner.

According to the above-described embodiment, a member for supporting the bottom plate of the storage member does not have to be provided in the rear portion of the vehicle. Hence, the rear portion of the vehicle is made compact. Furthermore, the front plate, the rear plate and the bottom plate of the storage member do not have to be provided with a support structure. As a result, the capacity of the storage member is increased.

According to another embodiment, the straddle-type vehicle preferably further includes: an additional storage member disposed below the seat and forward of the storage member; and a seal member interposed between the seat and the additional storage member.

According to the above-described embodiment, when the seat is closed, a gap between the seat and the additional storage member is sealed by the seal member. Thus, dust is prevented from entering the inside of the additional storage member. Therefore, an object resistant to a certain amount of dust settled thereon is stored in the storage member, while an object on which dust should not settle is stored in the additional storage member. Hence, an object is stored in accordance with its properties. A storage space is ensured without having to increase the storage member in size, and therefore, compactness of the rear portion of the vehicle does not degrade.

According to the present invention, the straddle-type vehicle further includes: a fuel tank disposed below the seat and forward of the storage member; and a tank cover attached to the fuel tank. The storage member and the tank cover are preferably integral with each other.

According to the above-described embodiment, the number of components is reduced because the storage member and the tank cover are provided as a single component. The storage member is attached to the fuel tank via the tank cover, thus making it possible to increase rigidity required to support the storage member.

According to yet another embodiment, the straddle-type vehicle preferably further includes a grab bar that includes: a left bar disposed leftward of the seat; a right bar disposed rightward of the seat; and a rear bar that runs between the left bar and the right bar and is located rearward of the seat and above the left bar and the right bar. A rear end of the storage member is preferably located rearward of a front end of the rear bar.

According to the above-described embodiment, the use of the grab bar allows a pillion passenger to get on the vehicle easily. A portion of the storage member is located rearward of the front end of the rear bar of the grab bar, and therefore, a space defined in the rear portion of the vehicle and located rearward of the front end of the rear bar is effectively utilized as an installation space for the storage member. As a result, the storage member is installed while compactness of the rear portion of the vehicle is ensured.

According to still yet another embodiment, the straddle-type vehicle preferably is a scooter.

According to the above-described embodiment, the foregoing effects are obtained in the scooter.

### ADVANTAGEOUS EFFECTS OF INVENTION

Various embodiments of the present teaching provide a straddle-type vehicle which allows a tail light and/or rear flashers to be increased in size while ensuring compactness of a rear portion of the vehicle, and in which a storage member having a sufficient capacity is provided in the rear portion of the vehicle.

### BRIEF DESCRIPTION OF DRAWINGS

FIG. 1 is a left side view of a scooter according to an embodiment.
FIG. 2 is a plan view of the scooter.
FIG. 3 is a rear view of the scooter.
FIG. 4 is a rear view illustrating main components of the scooter.
FIG. 5 is a left side view of a rear portion of the scooter when a seat is opened.
FIG. 6 is a plan view of the rear portion of the scooter when the seat is opened.
FIG. 7 is a back side view of the seat.
FIG. 8 is a cross-sectional view taken along the line VIII-VIII of FIG. 6.
FIG. 9 is a plan view of the rear portion of the scooter when the seat is opened and a grab bar is removed.
FIG. 10 is a plan view of the rear portion of the scooter when the seat is opened and the grab bar and rear cover are removed.
FIG. 11 is a perspective view of a storage member, a tank cover and a fuel tank.
FIG. 12 is a left side view of the storage member, the tank cover and the fuel tank.
FIG. 13 is a right side view of the rear portion of the scooter when a lower side cover is removed.

### DESCRIPTION OF EMBODIMENTS

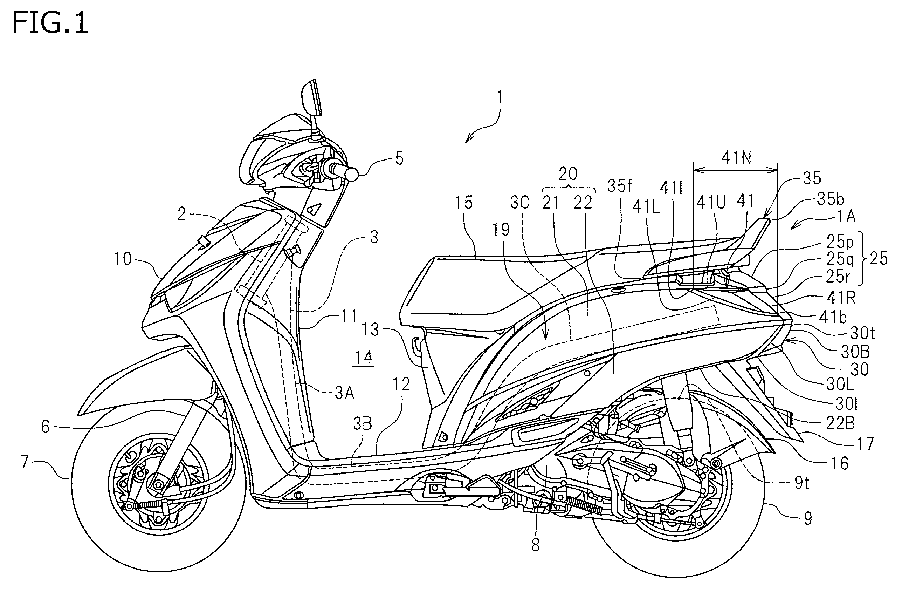

Hereinafter, an embodiment will be described. As illustrated in FIG. 1, a straddle-type vehicle according to the present embodiment is a scooter 1. It is to be noted that the straddle-type vehicle according to the present teaching is not limited to the scooter 1. For example, the straddle-type vehicle may be any type of motorcycle other than the scooter 1. The straddle-type vehicle may be a vehicle other than a motorcycle, such as an ATV (All Terrain Vehicle). Note that the term "straddle-type vehicle" refers to a vehicle that a rider straddles when getting on the vehicle.

In the following description, unless otherwise noted, the terms "front", "rear", "right", "left", "up" and "down" refer to front, rear, right, left, up and down with respect to a rider sitting on a seat 15, respectively. The terms "up" and "down" correspond to a vertically upward direction and a vertically downward direction when the scooter 1 is brought to a stop on a horizontal plane, respectively.

The scooter 1 preferably includes a body frame 3 fixed to a head pipe 2. A steering shaft (not illustrated) is supported by the head pipe 2. A handlebar 5 is attached to an upper portion of the steering shaft. A front fork 6 is connected to a lower portion of the steering shaft. A front wheel 7 is supported by the front fork 6. The scooter 1 preferably further includes a power unit 8. Although not illustrated, the power unit 8 preferably includes an internal combustion engine and a V-belt type continuously variable transmission. A front end portion of the power unit 8 is supported by the body frame 3 in a swingable manner. A rear wheel 9 is connected to a rear end portion of the power unit 8. The rear wheel 9 is disposed below the seat 15.

The body frame 3 preferably includes: a front frame 3A that extends obliquely downward and rearward from the head pipe 2; lower frames 3B that extend rearward from a lower end portion of the front frame 3A; and seat frames 3C that extend obliquely upward and rearward from rear end portions of the lower frames 3B. In a side view of the vehicle, a concave 14 is provided rearward of the front frame 3A, above the lower frames 3B and forward of the seat frames 3C.

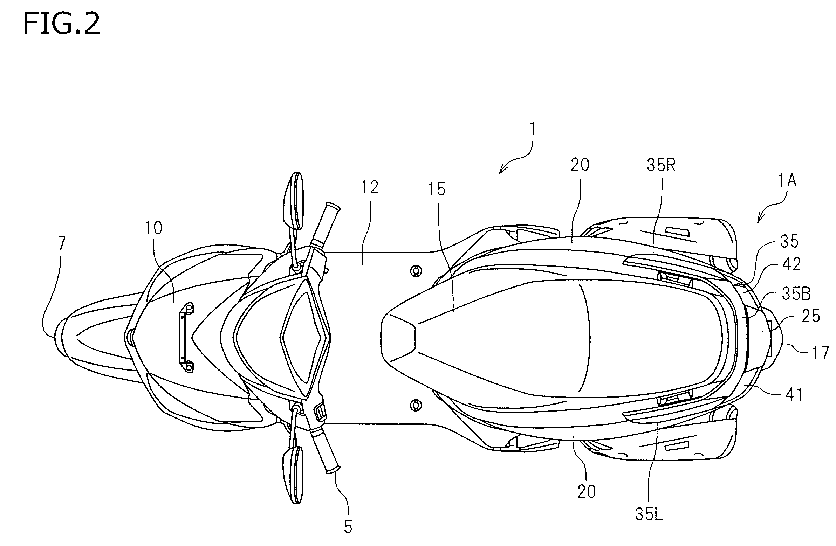

A front cover 10 is provided forward of the head pipe 2 and the front frame 3A. An inner panel 11 is provided rearward of the head pipe 2 and the front frame 3A. A footrest 12 (see FIG. 2) is provided above the lower frames 3B. The seat 15 is disposed above the seat frames 3C. The scooter 1 preferably further includes a body cover 19 disposed below the seat 15. The body cover 19 preferably includes an underseat cover 13, and right and left side covers 20. Each side cover 20 is disposed rearward of the underseat cover 13.

Each side cover 20 preferably includes: an upper side cover 21 disposed below the seat 15; and a lower side cover 22 disposed below the upper side cover 21. The upper side cover 21 and the lower side cover 22 are separate components and thus detachable from each other. The lower side cover 22 is assembled so as to be attachable to and detachable from the upper side cover 21. At least a portion of a lower edge 22B of the lower side cover 22 is disposed above an upper end 9t of the rear wheel 9. Although the upper end 9t of the rear wheel 9 is hidden by a rear fender 16 in FIG. 1, a position indicated by the reference sign "9t" corresponds to a position of the upper end of the rear wheel 9. A mud guard 17 is provided above the rear fender 16.

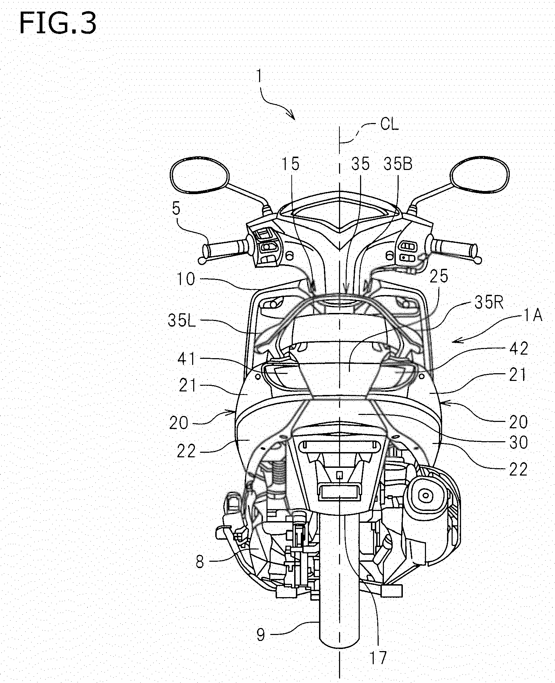

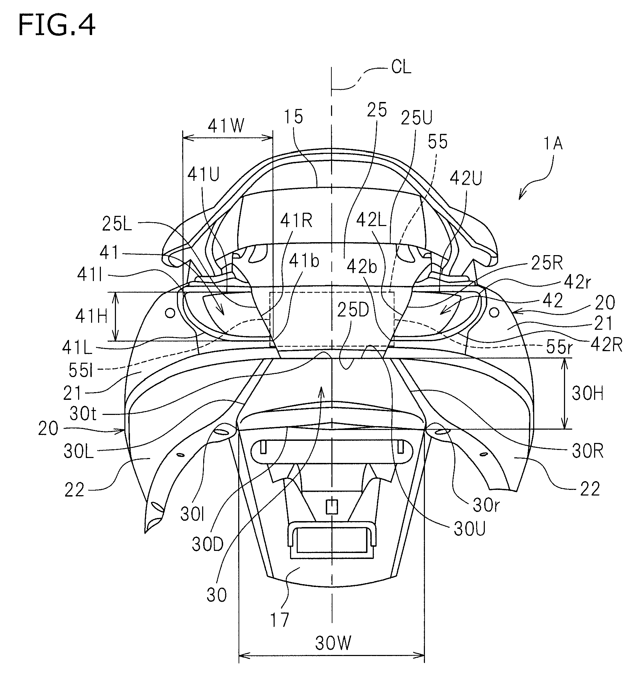

FIG. 3 is a rear view of the scooter 1. FIG. 4 is a rear view illustrating main components of the scooter 1. A rear portion 1A of the scooter 1 will be described with reference to FIGS. 3 and 4. Note that a portion of the scooter 1 which is located rearward of a front end of the rear wheel 9 will herein be referred to as the "rear portion 1A". The scooter 1 preferably includes a tail light 30, a left rear flasher 41, and a right rear flasher 42. The tail light 30, the left rear flasher 41 and the right rear flasher 42 are disposed at the body cover 19. A rear cover 25 is disposed between the left rear flasher 41 and the right rear flasher 42. In a rear view of the vehicle, the rear cover 25 is disposed below the seat 15 and above the tail light 30.

The tail light 30 is disposed between the left lower side cover 22 and the right lower side cover 22. The tail light 30 has a trapezoidal shape in the rear view of the vehicle. As illustrated in FIG. 4, an upper edge 30U and a lower edge 30D of the tail light 30 extend horizontally in the rear view of the vehicle. The upper edge 30U of the tail light 30 is shorter than the lower edge 30D thereof in the rear view of the vehicle. A left edge 30L of the tail light 30 extends obliquely downward and leftward. A right edge 30R of the tail light 30 extends obliquely downward and rightward. A dimension 30H of the tail light 30 in a vertical direction of the vehicle is smaller than a dimension 30W of the tail light 30 in a width direction of the vehicle. A line CL is a center line of the vehicle. The tail light 30 has a symmetrical shape with respect to the vehicle center line CL. As illustrated in FIG. 1, the tail light 30 extends obliquely upward and rearward in the side view of the vehicle. The left edge 30L of the tail light 30 extends obliquely upward and rearward in the side view of the vehicle. A rear edge 30B of the tail light 30 extends obliquely upward and rearward in the side view of the vehicle.

As illustrated in FIG. 4, the left rear flasher 41 is disposed above the tail light 30. The left rear flasher 41 preferably includes an upper edge 41 U, a left edge 41L, and a right edge 41 R. In the rear view of the vehicle, the upper edge 41 U extends horizontally, the left edge 41 L extends obliquely downward and rightward, and the right edge 41 R extends obliquely downward and rightward. As illustrated in FIG. 1, in the side view of the vehicle, the upper edge 41 U extends horizontally, the left edge 41 L extends obliquely downward and rearward, and the right edge 41 R extends obliquely downward and rearward. As illustrated in FIG. 4, a lower end 41 b of the right edge 41 R is a rightmost portion of the left rear flasher 41. The lower end 41 b is located leftward of the vehicle center line CL. The entire left rear flasher 41 is disposed leftward of the vehicle center line CL. A dimension 41W of the left rear flasher 41 in the width direction of the vehicle is smaller than a dimension 41 N of the left rear flasher 41 in a front-rear direction of the vehicle (see FIG. 1). A dimension 41 H of the left rear flasher 41 in the vehicle vertical direction is smaller than the dimension 41 N of the left rear flasher 41 in the vehicle front-rear direction. The dimension 41 H of the left rear flasher 41 in the vehicle vertical direction is smaller than the dimension 41W of the left rear flasher 41 in the vehicle width direction.

As illustrated in FIG. 4, the right rear flasher 42 is disposed above the tail light 30. The right rear flasher 42 and the left rear flasher 41 are provided symmetrically with respect to the vehicle center line CL. Therefore, detailed description of the right rear flasher 42 will be omitted.

The tail light 30 is disposed below the left rear flasher 41 and the right rear flasher 42. In the rear view of the vehicle, an upper end 30t of the tail light 30 is located below the lower end 41 b of the left rear flasher 41 and a lower end 42b of the right rear flasher 42. Alternatively, a portion of the tail light 30 may be disposed above the lower end 41 b of the left rear flasher 41 and the lower end 42b of the right rear flasher 42.

The lower end 41 b of the left rear flasher 41 also serves as a right end of the left rear flasher 41. The lower end 42b of the right rear flasher 42 also serves as a left end of the right rear flasher 42. A left end 30l of the tail light 30 is disposed leftward of the right end 41 b of the left rear flasher 41. The left end 301 of the tail light 30 is disposed rightward of a left end 41l of the left rear flasher 41. A right end 30r of the tail light 30 is disposed rightward of the left end 42b of the right rear flasher 42. The right end 30r of the tail light 30 is disposed leftward of a right end 42r of the right rear flasher 42.

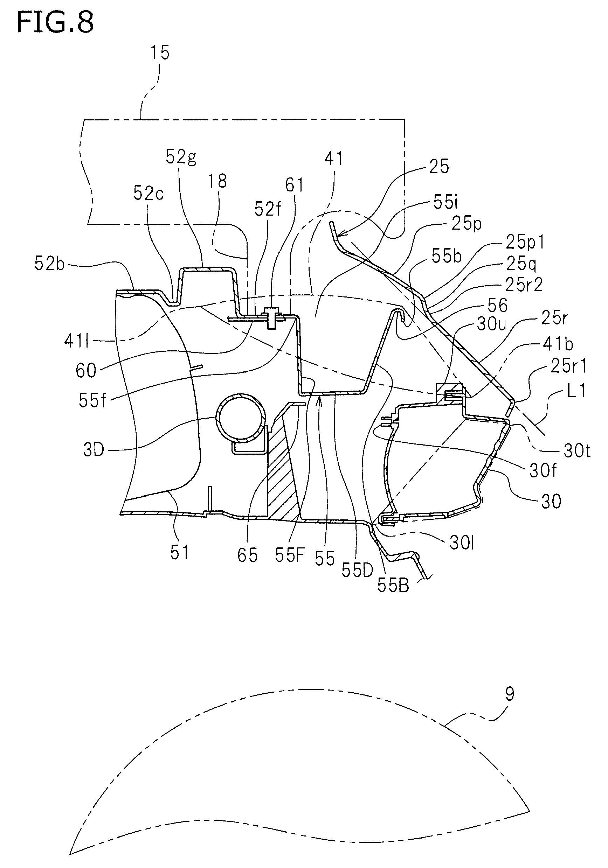

As illustrated in FIGS. 1 and 8, each of the left end 30l and the right end 30r of the tail light 30 also serves as a front end of the tail light 30. The left end 411 of the left rear flasher 41 also serves as a front end of the left rear flasher 41. The right end 42r of the right rear flasher 42 also serves as a front end of the right rear flasher 42. The right end 41 b of the left rear flasher 41 also serves as a rear end of the left rear flasher 41. The left end 42b of the right rear flasher 42 also serves as a rear end of the right rear flasher 42. The upper end 30t of the tail light 30 also serves as a rear end of the tail light 30. As illustrated in FIG. 1, the front end 30l of the tail light 30 is disposed rearward of the front end 411 of the left rear flasher 41. The front end 30l of the tail light 30 is disposed forward of the rear end 41 b of the left rear flasher 41. Similarly, the front end 30l of the tail light 30 is disposed rearward of the front end 42r of the right rear flasher 42. The front end 30l of the tail light 30 is disposed forward of the rear end 42b of the right rear flasher 42. The rear end 30t of the tail light 30 is disposed rearward of the rear end 41 b of the left rear flasher 41. The rear end 30t of the tail light 30 is disposed rearward of the rear end 42b of the right rear flasher 42.

As illustrated in FIG. 4, the rear cover 25 has a trapezoidal shape in the rear view of the vehicle. An upper edge 25U and a lower edge 25D of the rear cover 25 extend horizontally in the rear view of the vehicle. The upper edge 25U of the rear cover 25 is longer than the lower edge 25D thereof in the rear view of the vehicle. A left edge 25L of the rear cover 25 extends obliquely downward and rightward. A right edge 25R of the rear cover 25 extends obliquely downward and leftward. The rear cover 25 has a symmetrical shape with respect to the vehicle center line CL.

As illustrated in FIG. 1, in the side view of the vehicle, the rear cover 25 preferably includes: a first rear edge 25p that extends obliquely downward and rearward; a second rear edge 25q that extends downward from the first rear edge 25p; and a third rear edge 25r that extends obliquely downward and rearward from the second rear edge 25q. Although the second rear edge 25q extends obliquely downward and rearward from the first rear edge 25p in this embodiment, the second rear edge 25q may extend vertically downward from the first rear edge 25p. In the side view of the vehicle, a lower end 25p1 of the first rear edge 25p is located above a straight line L1 through which a lower end 25r1 of the third rear edge 25r and an upper end 25r2 of the third rear edge 25r are connected to each other (see FIG. 8). Thus, the lower end 25p1 of the first rear edge 25p bulges outward. In other words, a portion of the rear cover 25 bulges outward.

The rear portion 1A of the scooter 1 is provided with a grab bar 35. The grab bar 35 is a member that is grabbed by a pillion passenger when the pillion passenger supports his or her body. As illustrated in FIG. 2, the grab bar 35 preferably includes: a left bar 35L disposed leftward of the seat 15; a right bar 35R disposed rightward of the seat 15; and a rear bar 35B disposed rearward of the seat 15. The rear bar 35B runs between the left bar 35L and the right bar 35R. As illustrated in FIG. 3, the rear bar 35B is located above the left bar 35L and the right bar 35R.

As illustrated in FIG. 1, the grab bar 35 is disposed above the left rear flasher 41 and the right rear flasher 42. A front end 35f of the grab bar 35 is located forward of the front end 41l of the left rear flasher 41. A rear end 35b of the grab bar 35 is located forward of the rear end 41 b of the left rear flasher 41. The front end 35f of the grab bar 35 is located forward of the front end 42r of the right rear flasher 42. The rear end 35b of the grab bar 35 is located forward of the rear end 42b of the right rear flasher 42. As illustrated in FIG. 2, the grab bar 35 overlaps with the left rear flasher 41 and the right rear flasher 42 in a plan view of the vehicle.

As illustrated in FIG. 1, the grab bar 35 is disposed above the tail light 30. The front end 35f of the grab bar 35 is located forward of the front end 30l of the tail light 30. The rear end 35b of the grab bar 35 is located rearward of the front end 30l of the tail light 30 and forward of the rear end 30t of the tail light 30.

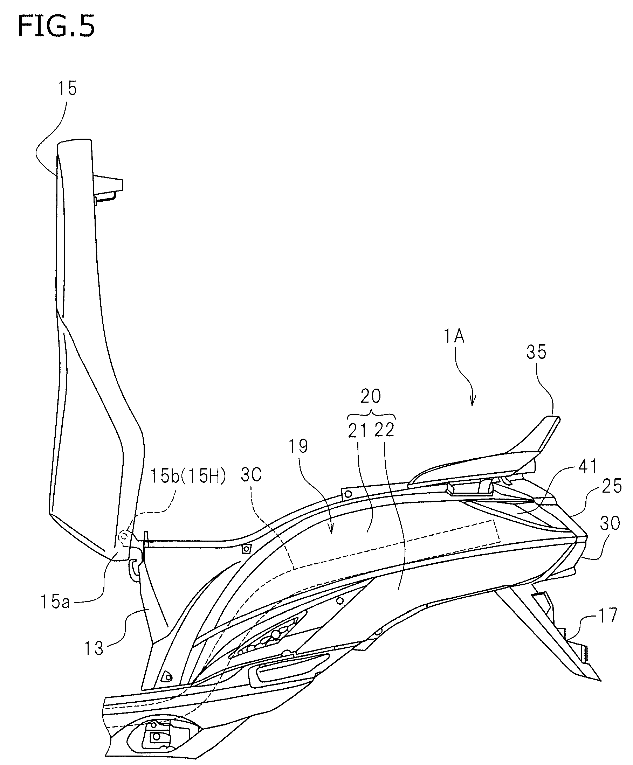

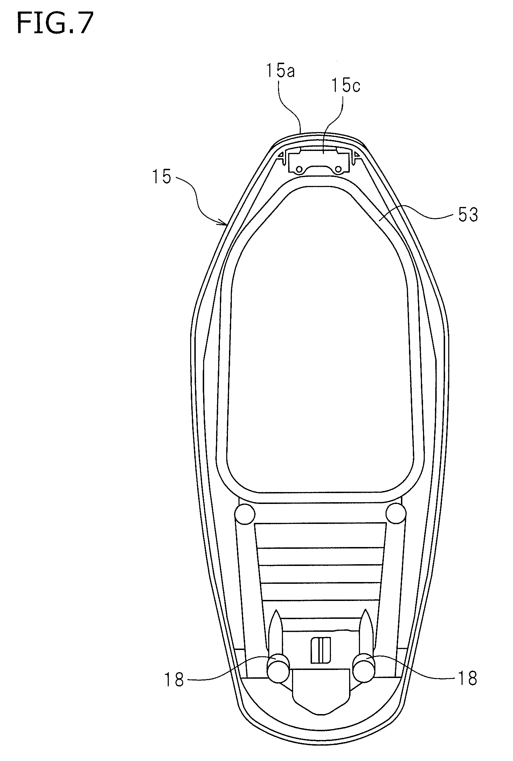

As illustrated in FIG. 5, an upper portion of the underseat cover 13 is provided with a fixation bracket 15b in which a hole is made. As illustrated in FIG. 7, a front end portion 15a of the seat 15 is also provided with a fixation bracket 15c in which a hole is made. The fixation bracket 15b of the underseat cover 13 and the fixation bracket 15c of the seat 15 are connected to each other through a shaft (not illustrated). The shaft passes through the hole of the fixation bracket 15b of the underseat cover 13 and the hole of the fixation bracket 15c of the seat 15. A hinge mechanism 15H is provided by the shaft, the fixation bracket 15b of the underseat cover 13, and the fixation bracket 15c of the seat 15. The seat 15 is rotatable around the shaft. The hinge mechanism 15H allows the seat 15 to be opened and closed. The seat 15 is rotatable around its front end portion. It is to be noted that opening and closing of the seat 15 is not limited to any particular mode. For example, the seat 15 may be rotatable around its lateral portion. When the seat 15 is put into a sideways position as illustrated in FIG. 1, the rider is allowed to sit on the seat 15. When the seat 15 is put into a vertical position as illustrated in FIG. 5, the inside of the body cover 19 is exposed. The seat 15 functions as an openable and closable lid that covers the inside of the body cover 19. Hereinafter, a situation "when the seat 15 is put into the sideways position" will be referred to as a situation "when the seat 15 is closed", and a situation "when the seat 15 is put into the vertical position" will be referred to as a situation "when the seat 15 is opened". Note that in the situation "when the seat 15 is closed", the seat 15 is not rotated at all and the seat 15 is locked by a seat lock (not illustrated). When the seat 15 is closed, the seat 15 extends in the vehicle front-rear direction. When the seat 15 is opened, the seat 15 is rotated to the maximum extent possible. When the seat 15 is opened, the seat 15 extends in the vehicle vertical direction. It is to be noted that a rotatable range of the seat 15 may be set to an appropriate range. When a rotatable angle of the seat 15 is smaller than 90°, the seat 15 might be inclined with respect to a vertical line when the seat 15 is opened.

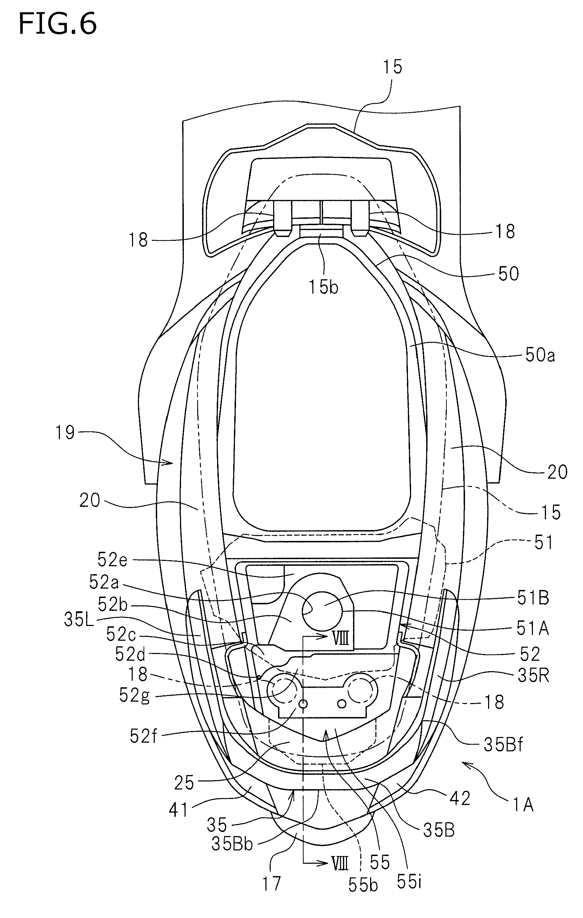

FIG. 6 is a partial plan view of the scooter 1 when the seat 15 is opened. As illustrated in FIG. 6, a storage box 50, a fuel tank 51, a tank cover 52, and a storage member 55 are disposed inside of the body cover 19. The fuel tank 51 is disposed rearward of the storage box 50. The tank cover 52 is attached onto the fuel tank 51. The storage member 55 is disposed rearward of the tank cover 52. In the present embodiment, the tank cover 52 and the storage member 55 are molded in one piece. Alternatively, the tank cover 52 and the storage member 55 may be provided as separate components and assembled to each other. The tank cover 52 and the storage member 55 are made of resin. It is to be noted that a material used for the tank cover 52 and the storage member 55 is not limited to any particular material.

The storage box 50 is capable of storing an object such as a bag or a helmet. An object to be stored in the storage box 50 is not limited to any particular object. A peripheral edge of the storage box 50 is provided with a horizontal seal surface 50a. FIG. 7 is a back side view of the seat 15. A back side of the seat 15 is provided with a seal member 53 associated with the seal surface 50a of the storage box 50. A material used for the seal member 53 is not limited to any particular material. For example, the seal member 53 is made of rubber. When the seat 15 is closed, the seal member 53 comes into contact with the seal surface 50a. In other words, when the seat 15 is closed, the seal member 53 is interposed between the seat 15 and the storage box 50. Thus, the inside of the storage box 50 is sealed by the seal member 53. As a result, foreign matter such as dust is prevented from entering the inside of the storage box 50 from outside.

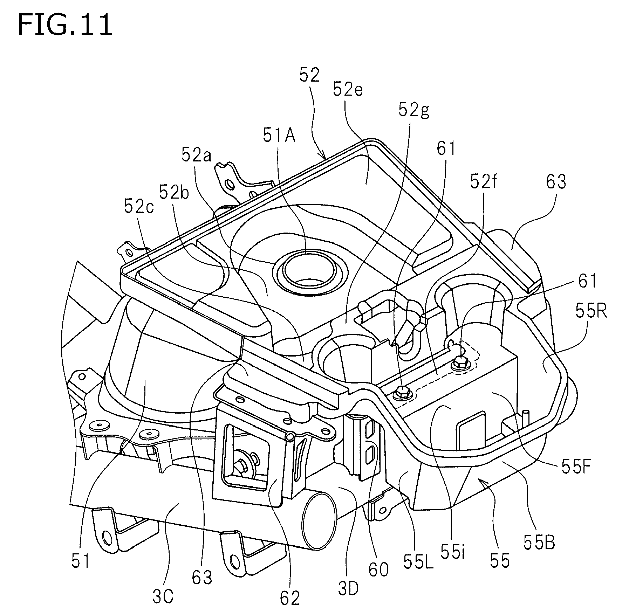

As illustrated in FIGS. 6 and 11, the tank cover 52 is provided with a through hole 52a through which an oil filler hole 51A of the fuel tank 51 is passed. An oil filler cap 51 B is fitted into the oil filler hole 51A. A concave 52b is provided around the through hole 52a of the tank cover 52. The concave 52b is a portion of the tank cover 52 which is lower in height than another portion 52e of the tank cover 52. Another concave 52c which is lower in height than the concave 52b is provided rearward of the concave 52b. A left portion of the concave 52c is provided with an outlet 52d. Although not illustrated, a hose is connected to the outlet 52d. In the event that oil is spilled during oil filling, the spilled oil is temporarily accumulated in the concave 52b and then flowed down into the concave 52c so as to be discharged through the outlet 52d and the hose. Hence, oil is prevented from being accumulated on the tank cover 52.

As illustrated in FIG. 7, the seat 15 is provided with support columns 18. The storage member 55 preferably includes a support portion 52f that supports the support columns 18 of the seat 15. As illustrated in FIG. 8, a convex 52g is provided between the concave 52c and the support portion 52f. The convex 52g is higher in height than the concave 52b and the concave 52c. The convex 52g is higher in height than the support portion 52f. By providing the convex 52g between the concave 52c and the support portion 52f, oil is prevented from flowing from the concave 52c toward the support portion 52f.

The storage member 55 is disposed rearward of the tank cover 52. The storage member 55 is disposed in the rear portion 1A of the scooter 1. The storage member 55 is disposed below the seat 15 and above the rear wheel 9. The storage member 55 is a member for storing an object. The storage member 55 preferably includes an opening 55i that is exposed when the seat 15 is opened. As used herein, the term "opening that is exposed" refers to an opening which is visually recognized from above or the side and through which an object is inserted into and removed from the storage member 55. The opening 55i is opened upward. When the seat 15 is closed, the seat 15 is located over the opening 55i. In other words, when the seat 15 is closed, the seat 15 and the storage member 55 overlap with each other in the plan view (see FIG. 6). When the seat 15 is opened, the seat 15 is moved away from a position over the opening 55i (see FIG. 5). Although the seat 15 is moved away from a position over the entire opening 55i when the seat 15 is opened in the present embodiment, the seat 15 may be moved away from a position over a portion of the opening 55i. An object is inserted into and removed from the storage member 55 through the opening 55i. An object to be stored in the storage member 55 is not limited to any particular object. Examples of an object to be stored in the storage member 55 include: a tool used for maintenance of the scooter 1; a cloth for wiping the seat 15, for example; and a small bag.

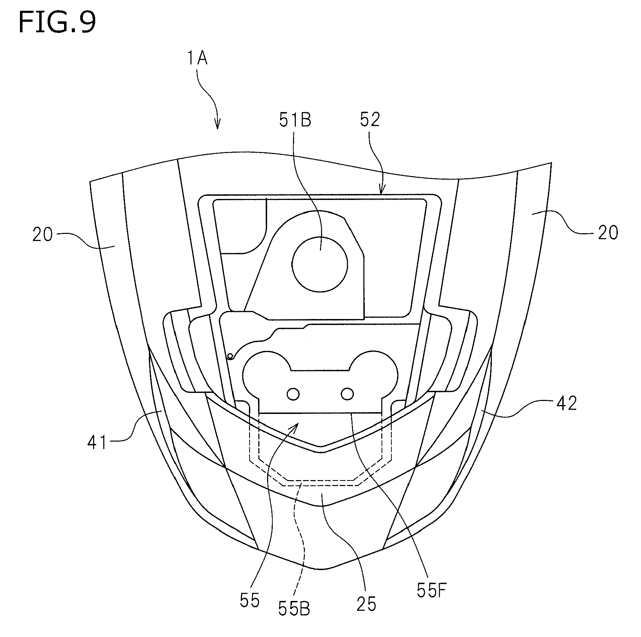

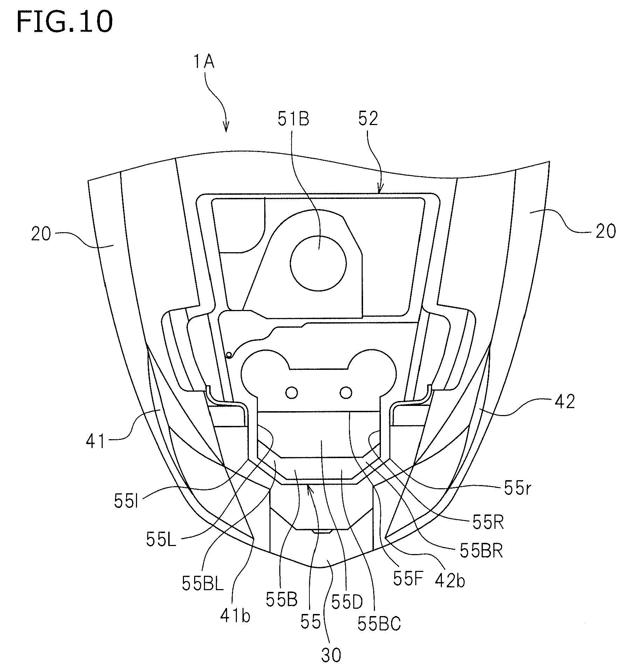

FIG. 9 is a plan view of the rear portion 1A of the scooter 1 when the seat 15 is opened and the grab bar 35 is removed. FIG. 10 is a plan view of the rear portion 1A when the rear cover 25 is also removed. As illustrated in FIG. 9, a portion of the storage member 55 overlaps with the rear cover 25 in the plan view of the vehicle.

As illustrated in FIG. 8, the storage member 55 preferably includes: a bottom plate 55D; a front plate 55F that extends upward from the bottom plate 55D; and a rear plate 55B that extends upward from the bottom plate 55D. The rear plate 55B is disposed rearward of the front plate 55F. As illustrated in FIG. 10, the storage member 55 preferably further includes: a left plate 55L that extends upward from the bottom plate 55D; and a right plate 55R that extends upward from the bottom plate 55D. The left plate 55L is disposed between a left end of the front plate 55F and a left end of the rear plate 55B. The right plate 55R is disposed between a right end of the front plate 55F and a right end of the rear plate 55B. The right plate 55R is disposed rightward of the left plate 55L. As illustrated in FIG. 8, the front plate 55F extends vertically. The left plate 55L and the right plate 55R also extend vertically. The rear plate 55B extends obliquely upward and rearward. It is to be noted that shapes of the front plate 55F, the left plate 55L, the right plate 55R and the rear plate 55B are not limited to any particular shapes. An upper end portion of the rear plate 55B is bent so as to be extended rearward and then downward. The upper end portion of the rear plate 55B is provided with a groove 56 that is recessed upward. Although not illustrated, an upper end portion of the left plate 55L and an upper end portion of the right plate 55R are each also provided with a similar groove 56. As illustrated in FIG. 10, the rear plate 55B preferably includes: a center portion 55BC that extends in the vehicle width direction; a left portion 55BL that extends obliquely forward and leftward from a left end of the center portion 55BC; and a right portion 55BR that extends obliquely forward and rightward from a right end of the center portion 55BC. A dimension of the storage member 55 at its left end in the vehicle front-rear direction decreases as the storage member 55 extends leftward. A dimension of the storage member 55 at its right end in the vehicle front-rear direction also decreases as the storage member 55 extends rightward.

As illustrated in FIG. 9, the rear plate 55B of the storage member 55 overlaps with the rear cover 25 in the plan view of the vehicle. The front plate 55F does not overlap with the rear cover 25 in the plan view of the vehicle. The front plate 55F is disposed forward of the rear cover 25. Alternatively, at least a portion of the front plate 55F may overlap with the rear cover 25 in the plan view of the vehicle. Optionally, the entire front plate 55F may overlap with the rear cover 25 in the plan view of the vehicle. As illustrated in FIG. 8, the rear plate 55B and a portion of the bottom plate 55D are disposed below the first rear edge 25p of the rear cover 25. As already mentioned above, the lower end 25p1 of the first rear edge 25p is located above the straight line L1 through which the lower end 25r1 and the upper end 25r2 of the third rear edge 25r are connected to each other. The second rear edge 25q and a portion of the first rear edge 25p bulge outward of the third rear edge 25r. The storage member 55 is disposed below the outwardly bulged portion of the rear cover 25.

As illustrated in FIG. 8, the storage member 55 overlaps with the left rear flasher 41 in the side view of the vehicle. The right rear flasher 42 and the left rear flasher 41 are disposed symmetrically. Therefore, although not illustrated, the storage member 55 also overlaps with the right rear flasher 42 in the side view of the vehicle. A front end 55f of the storage member 55 is located rearward of the front end 41l of the left rear flasher 41. A rear end 55b of the storage member 55 is located forward of the rear end 41 b of the left rear flasher 41. The rear end 55b of the storage member 55 is located rearward of the front end 30l of the tail light 30. The rear end 55b of the storage member 55 is located forward of the rear end 30t of the tail light 30.

As illustrated in FIG. 10, in the plan view of the vehicle, a left end 55l of the storage member 55 is located leftward of the right end 41 b of the left rear flasher 41, and a right end 55r of the storage member 55 is located rightward of the left end 42b of the right rear flasher 42.

As illustrated in FIG. 4, the left end 55l of the storage member 55 is located rightward of the left end 30l of the tail light 30, and the right end 55r of the storage member 55 is located leftward of the right end 30r of the tail light 30.

A rear end of the storage member 55 is located rearward of a front end of the tail light 30. For example, in the cross section illustrated in FIG. 8, the rear end 55b of the storage member 55 is located rearward of a front end 30f of the tail light 30. Although not illustrated, also in a vertical cross section passing through the vehicle center line CL, a rear end of the storage member 55 is located rearward of a front end of the tail light 30. A portion of the storage member 55 and a portion of the tail light 30 overlap with each other when viewed in the vertical direction. A portion of the storage member 55 and a portion of the tail light 30 are located on the same vertical line.

A lower end of the storage member 55 is located below an upper end of the tail light 30. For example, in the cross section illustrated in FIG. 8, a lower end of the storage member 55 (i.e., a lower surface of the bottom plate 55D) is located below an upper end 30u of the tail light 30. Although not illustrated, also in the vertical cross section passing through the vehicle center line CL, a lower end of the storage member 55 is located below an upper end of the tail light 30. A portion of the storage member 55 and a portion of the tail light 30 overlap with each other when viewed in the front-rear direction. A portion of the storage member 55 and a portion of the tail light 30 are located on the same horizontal line.

As illustrated in FIG. 8, the storage member 55 is located away from the tail light 30. A gap is provided between the storage member 55 and the tail light 30. A restricting member 65 is provided below the storage member 55. The restricting member 65 is a member for preventing the storage member 55 from coming into contact with the tail light 30. A gap provided between the restricting member 65 and the storage member 55 is smaller than the gap between the storage member 55 and the tail light 30. The storage member 55 might swing during traveling of the scooter 1. When the storage member 55 swings, the storage member 55 comes into contact with the restricting member 65. Thus, large swinging of the storage member 55 is restricted by the restricting member 65. Hence, the storage member 55 is prevented from coming into contact with the tail light 30. Consequently, even if the storage member 55 swings, the gap between the storage member 55 and the tail light 30 is maintained by the restricting member 65.

As illustrated in FIG. 6, the rear end 55b of the storage member 55 is located rearward of a front end 35Bf of the rear bar 35B of the grab bar 35, and is located forward of a rear end 35Bb of the rear bar 35B.

As illustrated in FIG. 11, a cross member 3D is fixed to the right and left seat frames 3C (the right seat frame is not illustrated). The cross member 3D extends in the vehicle width direction. A bracket 60 is fixed onto the cross member 3D. The support portion 52f of the storage member 55 is supported by the bracket 60. In this embodiment, the support portion 52f is fixed to the bracket 60 with bolts 61. It is to be noted that a component with which the support portion 52f is supported by the bracket 60 is not limited to any particular component. The support portion 52f of the storage member 55 is supported by the cross member 3D via the bracket 60. As used herein, the term "support" not only refers to directly supporting something but also refers to indirectly supporting something via another member. Hence, it can be said that the support portion 52f of the storage member 55 is supported by the cross member 3D. The support portion 52f is located forward of the front plate 55F and above the bottom plate 55D. In the present embodiment, the support portion 52f is disposed above the front plate 55F. Alternatively, the support portion 52f may be disposed below an upper end of the front plate 55F. The support portion 52f is supported by the bracket 60, thus allowing the storage member 55 to be supported by the cross member 3D in a cantilever manner. A front portion of the storage member 55 is supported by the cross member 3D, but a rear portion of the storage member 55 is not supported by the cross member 3D. Note that the cross member 3D is an example of a body frame disposed below the seat 15 and above the rear wheel 9. The body frame disposed below the seat 15 and above the rear wheel 9 is not limited to the cross member 3D.

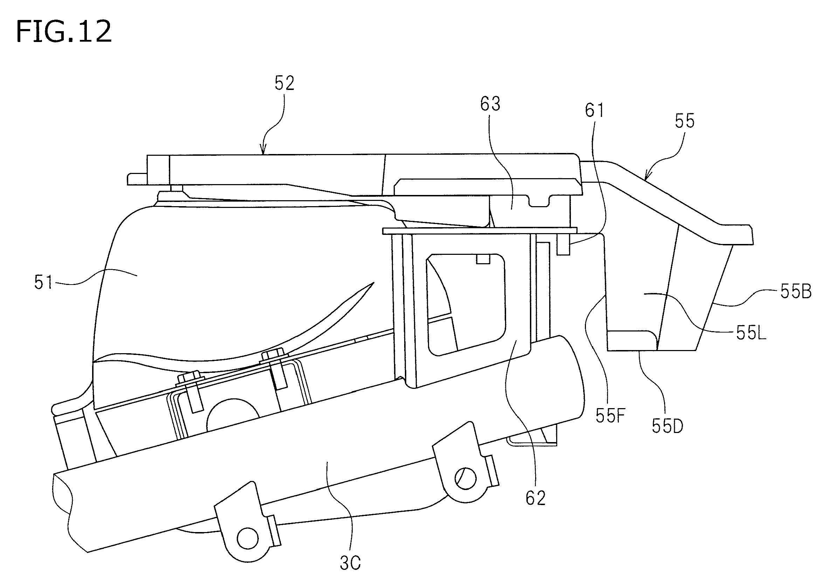

As illustrated in FIG. 12, a bracket 62 is fixed onto the left seat frame 3C. Although not illustrated, a similar bracket is fixed onto the right seat frame 3C. Other support portions 63 are provided rightward and leftward of the support portion 52f of the storage member 55. Each support portion 63 is supported on the associated bracket 62. In this embodiment, each support portion 63 is merely placed on the associated bracket 62. Each support portion 63 is not fixed to the associated bracket 62 with a bolt. Alternatively, each support portion 63 may be fixed to the associated bracket 62 with a bolt. The support portions 63 of the storage member 55 are supported by the seat frames 3C.

As described above, in the scooter 1, a rear portion of the lower edge 22B of the body cover 19 is disposed above the upper end 9t of the rear wheel 9 as illustrated in FIG. 1. Consequently, a dimension of the rear portion 1A of the scooter 1 in the vehicle vertical direction is small.

As illustrated in FIG. 4, the tail light 30 and the left rear flasher 41 are vertically out of alignment with each other, and the tail light 30 and the right rear flasher 42 are vertically out of alignment with each other. The left end 30l of the tail light 30 is located leftward of the right end 41 b of the left rear flasher 41, and the right end 30r of the tail light 30 is located rightward of the left end 42b of the right rear flasher 42. As compared with a case where the left rear flasher 41, the tail light 30 and the right rear flasher 42 are arranged in alignment with each other in a right-left direction, a dimension of the rear portion 1A of the scooter 1 in the vehicle width direction is small while the tail light 30 and the rear flashers 41 and 42 are increased in size. According to the present embodiment, the tail light 30 and the rear flashers 41 and 42 are increased in size while compactness of the rear portion 1A of the scooter 1 in the vehicle width direction is maintained.

In the scooter 1, the tail light 30 and the rear flashers 41 and 42 are disposed in the manner described above, thus making it possible to obtain space for the storage member 55 so that the storage member 55 is disposed at a position where the storage member 55 overlaps with the rear cover 25 in the plan view of the vehicle (see FIG. 9) and overlaps with the rear flashers 41 and 42 in the side view of the vehicle (see FIG. 8). Hence, the storage member 55 that is opened and closed by the seat 15 is disposed while compactness of the rear portion 1A of the scooter 1 is maintained. A mechanism for opening and closing the rear cover 25 does not have to be provided because the storage member 55 is opened and closed by the seat 15. Since a mechanism for opening and closing the rear cover 25 is omitted, the rear portion 1A of the scooter 1 is reduced in size.

As illustrated in FIG. 9, at least a portion of the storage member 55 overlaps with the rear cover 25 in the plan view of the vehicle, thus making it possible to increase a capacity of the storage member 55. Furthermore, a dimension of the rear portion 1A of the scooter 1 in the vehicle front-rear direction is reduced while the capacity of the storage member 55 is ensured. As illustrated in FIG. 8, at least a portion of the storage member 55 overlaps with the left rear flasher 41 and the right rear flasher 42 in the side view of the vehicle, and therefore, the dimensions of the rear portion 1A of the scooter 1 in the vehicle front-rear direction and vertical direction are reduced. As a result, the storage member 55, which is opened and closed by the seat 15, is disposed in the rear portion 1A while compactness of the rear portion 1A in the vehicle width direction, vertical direction and front-rear direction is maintained.

In the present embodiment, at least a portion of the storage member 55 overlaps with the rear cover 25 in the plan view of the vehicle, and a portion of the storage member 55 is disposed at a relatively rearward position. The rear cover 25 is disposed above the tail light 30 in the rear view of the vehicle. If an attempt is made to extend the tail light 30 further upward with the aim of increasing the tail light 30 in area, it is difficult to dispose a portion of the storage member 55 at a relatively rearward position in order to prevent interference between the rear portion of the storage member 55 and a front portion of the tail light 30, and as a result, the capacity of the storage member 55 might be reduced (see FIG. 8). If the tail light 30 is extended further downward in order to ensure the capacity of the storage member 55, the dimension of the rear portion 1A of the scooter 1 in the vehicle vertical direction is undesirably increased. However, in the scooter 1 according to the present embodiment, at least a portion of the tail light 30 is disposed below the left rear flasher 41 and the right rear flasher 42. Therefore, the dimension of the tail light 30 in the vehicle width direction is increased so as to ensure the area of the tail light 30. In other words, the tail light 30 does not have to be extended further upward or downward. As a result, the tail light 30 is increased in size and the dimension of the rear portion 1A of the scooter 1 in the vehicle vertical direction is reduced, while the capacity of the storage member 55 is ensured.

Accordingly, in the scooter 1 according to the present embodiment, the tail light 30 and/or the rear flashers 41 and 42 are/is increased in size and the storage member 55 having a sufficient capacity is provided in the rear portion 1A of the vehicle, while compactness of the rear portion 1A of the vehicle is ensured.

The dimension 41W of the left rear flasher 41 in the vehicle width direction is smaller than the dimension 41 N of the left rear flasher 41 in the vehicle front-rear direction. Similarly, the dimension of the right rear flasher 42 in the vehicle width direction is smaller than the dimension of the right rear flasher 42 in the vehicle front-rear direction. Hence, as illustrated in FIG. 10, the dimension of the rear portion 1A of the scooter 1 in the vehicle width direction is reduced while the sizes of the left rear flasher 41 and the right rear flasher 42 are ensured, although the storage member 55 is disposed between the left rear flasher 41 and the right rear flasher 42. In the scooter 1 according to the present embodiment, the dimension of the storage member 55 in the vehicle width direction is increased while compactness of the rear portion 1A is ensured. Thus, the capacity of the storage member 55 is sufficiently ensured. In the scooter 1, the dimension 41 H of the left rear flasher 41 in the vehicle verticai direction is smaller than the dimension 41 N of the left rear flasher 41 in the vehicle front-rear direction. Similarly, the dimension of the right rear flasher 42 in the vehicle vertical direction is smaller than the dimension of the right rear flasher 42 in the vehicle front-rear direction. Hence, the dimension of the rear portion 1A of the scooter 1 in the vehicle vertical direction is reduced while the sizes of the rear flashers 41 and 42 are ensured. Accordingly, in the scooter 1, the dimension of the rear portion 1A in the vehicle width direction and the dimension of the rear portion 1A in the vehicle vertical direction are both reduced while the capacity of the storage member 55 is ensured.

As illustrated in FIG. 4, the dimension 41 H of the left rear flasher 41 in the vehicle vertical direction is smaller than the dimension 41W of the left rear flasher 41 in the vehicle width direction. The dimension of the right rear flasher 42 in the vehicle vertical direction is smaller than the dimension of the right rear flasher 42 in the vehicle width direction. Therefore, in the scooter 1, the dimension of the rear portion 1A in the vehicle vertical direction is reduced while the dimension of the storage member 55 in the vertical direction is ensured. As a result, the rear portion 1A of the vehicle is made compact while the capacity of the storage member 55 is ensured.

As illustrated in FIG. 4, the dimension 30H of the tail light 30 in the vehicle vertical direction is smaller than the dimension 30W of the tail light 30 in the vehicle width direction. Consequently, in the scooter 1, the dimension of the rear portion 1A in the vehicle vertical direction is reduced while the capacity of the storage member 55 is ensured.

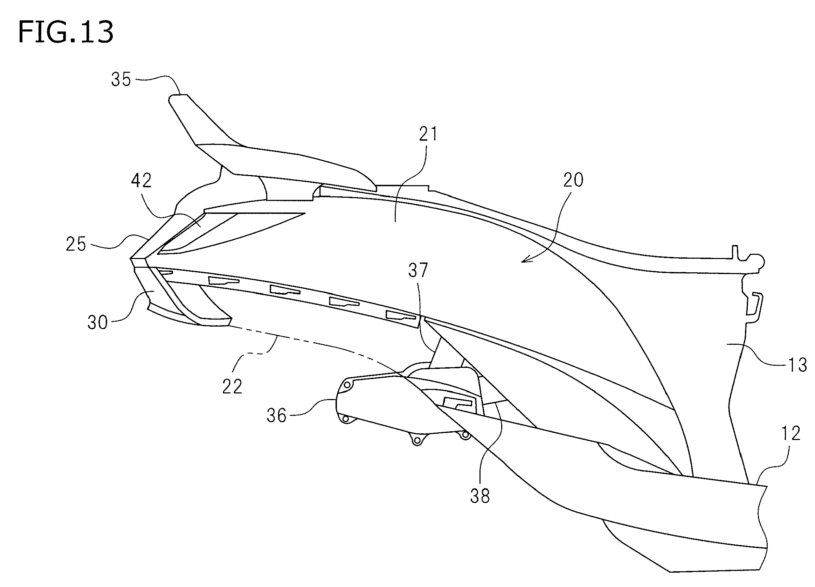

Each side cover 20 preferably includes the upper side cover 21 and the lower side cover 22. The lower side cover 22 is assembled so as to be attachable to and detachable from the upper side cover 21. By detaching the lower side cover 22, a vehicle component disposed inward of the lower side cover 22 is exposed without having to detach the entire side cover 20, i.e., both of the upper and lower side covers 21 and 22. FIG. 13 is a right side view of the rear portion 1A of the scooter 1 when the seat 15 and the lower side cover 22 are removed. As illustrated in FIG. 13, an air cleaner 36 is disposed inward of the lower side cover 22. In this embodiment, a portion of the air cleaner 36 is disposed leftward of the right lower side cover 22, but the entire air cleaner 36 may be disposed leftward of the right lower side cover 22. Air ducts 37 and 38 are connected to the air cleaner 36. The air cleaner 36 is exposed by detaching the right lower side cover 22. Hence, maintenance of the air cleaner 36 is easily performed without having to detach the entire right side cover 20. As illustrated in FIG. 1, a portion of the power unit 8 is disposed rightward of the left lower side cover 22. A portion of the power unit 8 is disposed inward of the left lower side cover 22. Thus, maintenance of the power unit 8 is easily performed by detaching the left lower side cover 22. In other words, maintenance of the power unit 8 is easily performed without having to detach the entire left side cover 20.

As illustrated in FIG. 4, the tail light 30 is disposed below the left rear flasher 41 and the right rear flasher 42. The upper end 30t of the tail light 30 is disposed below the lower end 41 b of the left rear flasher 41 and the lower end 42b of the right rear flasher 42 in the rear view of the vehicle. Thus, a dimension of the rear cover 25 in the vehicle vertical direction is increased. Hence, the dimension of the storage member 55 in the vehicle vertical direction is increased. Interference between the tail light 30 and the storage member 55 is unlikely to occur, thus allowing the storage member 55 to extend rearward. As a result, the capacity of the storage member 55 is increased.

The left end 30l of the tail light 30 is disposed rightward of the left end 41l of the left rear flasher 41, and the right end 30r of the tail light 30 is disposed leftward of the right end 42r of the right rear flasher 42. In other words, the left end 41l of the left rear flasher 41 is disposed leftward of the left end 30l of the tail light 30, and the right end 42r of the right rear flasher 42 is disposed rightward of the right end 30r of the tail light 30. Thus, a left portion of the left rear flasher 41 is positioned further leftward, and a right portion of the right rear flasher 42 is positioned further rightward. As a result, the left rear flasher 41 and the right rear flasher 42 are increased in size.

As illustrated in FIG. 1, the front ends 30l and 30r of the tail light 30 are disposed forward of the rear end 41 b of the left rear flasher 41. The front ends 30l and 30r of the tail light 30 are disposed forward of the rear end 42b of the right rear flasher 42. Thus, a portion of the tail light 30 is extended so as to be located forward of the rear end 41 b of the left rear flasher 41 and the rear end 42b of the right rear flasher 42. Portions of the rear flashers 41 and 42 are extended so as to be located rearward of the front ends 30l and 30r of the tail light 30. As a result, the tail light 30 and the rear flashers 41 and 42 are increased in size without having to increase the dimension of the rear portion 1A of the scooter 1 in the vehicle front-rear direction.

As illustrated in FIG. 8, the rear end 55b of the storage member 55 is disposed rearward of the front end 30f of the tail light 30. As a result, the dimension of the rear portion 1A of the scooter 1 in the vehicle front-rear direction is reduced while the capacity of the storage member 55 is ensured.

As illustrated in FIG. 1, the tail light 30 extends obliquely upward and rearward in the side view of the vehicle. Thus, the dimension 30H of the tail light 30 in the vehicle vertical direction is reduced while the area of the tail light 30 is ensured. Interference between the tail light 30 and the storage member 55 is more unlikely to occur, thus enabling an increase in the size of the storage member 55. As a result, the capacity of the storage member 55 is increased and the tail light 30 is increased in size, while compactness of the rear portion 1A of the scooter 1 is ensured.

As illustrated in FIG. 4, in the rear view of the vehicle, the right edge 41 R of the left rear flasher 41 extends obliquely downward and rightward, and a left edge 42L of the right rear flasher 42 extends obliquely downward and leftward. Thus, an upper portion of the storage member 55 is made larger than a lower portion of the storage member 55. As a result, the opening 55i (see FIG. 8) of the storage member 55 is enlarged.

As illustrated in FIG. 8, the lower end 25p1 of the first rear edge 25p of the rear cover 25 is located above the straight line L1 through which the lower end 25r1 and the upper end 25r2 of the third rear edge 25r are connected to each other. The same goes for the rear edges of the rear cover 25 in the side view of the vehicle (see FIG. 1). Thus, a portion of the rear cover 25 which is located above the storage member 55 bulges outward. Therefore, when the seat 15 is opened, a hand is easily inserted into and removed from the storage member 55. Consequently, an object is more easily stored in the storage member 55 while compactness of the rear portion 1A of the scooter 1 is ensured.

The storage member 55 preferably includes: the bottom plate 55D; the front plate 55F that extends upward from the bottom plate 55D; and the rear plate 55B that extends upward from the bottom plate 55D. Thus, an object is easily stored in the storage member 55.

Although the rear plate 55B may extend vertically, the rear plate 55B extends obliquely upward and rearward in the present embodiment. Thus, an object is more easily stored in the storage member 55.

When a hand holding an object is inserted into the storage member 55, the hand or object is likely to hit against the upper end portion of the rear plate 55B. Hence, the upper end portion of the rear plate 55B preferably has high rigidity. In the present embodiment, the upper end portion of the rear plate 55B is bent so as to be extended rearward and then downward. Therefore, the rigidity of the upper end portion of the rear plate 55B is ensured. Furthermore, a hand or an object is unlikely to get caught on the upper end portion of the rear plate 55B. As a result, an object is more easily stored in the storage member 55.

As illustrated in FIG. 9, the rear plate 55B overlaps with the rear cover 25 in the plan view of the vehicle. The rear plate 55B is disposed at a relatively rearward position, thus making it possible to increase a gap between the front plate 55F and the rear plate 55B. As a result, a storage space of the storage member 55 is increased.

At least a portion of the front plate 55F is disposed forward of the rear cover 25. At least a portion of the front plate 55F does not overlap with the rear cover 25 in the plan view of the vehicle. Hence, when the seat 15 is opened, an object is easily inserted into and removed from the storage member 55. The capacity of the storage member 55 is increased because the front plate 55F is disposed at a relatively forward position.

As illustrated in FIG. 11, the storage member 55 preferably includes the support portion 52f. The support portion 52f is located forward of the front plate 55F of the storage member 55 and above the bottom plate 55D thereof. The storage member 55 is supported by the cross member 3D via the support portion 52f in a cantilever manner. In the present embodiment, a member for supporting the bottom plate 55D of the storage member 55 does not have to be provided in the rear portion 1A of the scooter 1. Hence, the rear portion 1A of the scooter 1 is made compact. Furthermore, the front plate 55F, the rear plate 55B and the bottom plate 55D of the storage member 55 do not have to be provided with a support structure. Since such a structure is unnecessary, the capacity of the storage member 55 is increased accordingly.

As illustrated in FIG. 6, the storage box 50 is disposed forward of the storage member 55. The storage box 50 is an example of an additional storage member. As illustrated in FIG. 7, the back side of the seat 15 is provided with the seal member 53. When the seat 15 is closed, a gap between the seat 15 and the storage box 50 is sealed by the seal member 53. Thus, dust is prevented from entering the inside of the storage box 50. Therefore, an object resistant to a certain amount of dust settled thereon is stored in the storage member 55, while an object on which dust should not settle is stored in the storage box 50. Thus, an object is stored in an appropriate storage portion in accordance with its properties. Since the scooter 1 includes the storage box 50, a sufficient storage space is ensured without having to increase the storage member 55 in size. Consequently, compactness of the rear portion 1A of the scooter 1 does not degrade.

The storage member 55 is integral with the tank cover 52. The number of components is reduced because the storage member 55 and the tank cover 52 are provided as a single component. The storage member 55 is attached to the fuel tank 51 via the tank cover 52, thus making it possible to increase rigidity required to support the storage member 55.

The scooter 1 preferably includes the grab bar 35, thus allowing a pillion passenger to get on the vehicle easily. As illustrated in FIG. 6, the rear end 55b of the storage member 55 is located rearward of the front end 35Bf of the rear bar 35B of the grab bar 35. A portion of the storage member 55 is located rearward of the front end 35Bf of the rear bar 35B, and therefore, a space defined in the rear portion 1A of the scooter 1 and located rearward of the front end 35Bf of the rear bar 35B is effectively utilized as an installation space for the storage member 55. As a result, the storage member 55 is disposed in the rear portion 1A while compactness of the rear portion 1A of the scooter 1 is ensured.

### REFERENCE SIGNS LIST

- 1: scooter (straddle-type vehicle)
- 9: rear wheel
- 15: seat
- 20: side cover (body cover)
- 21: upper side cover
- 22: lower side cover
- 25: rear cover
- 30: tail light
- 35: grab bar
- 41: left rear flasher
- 42: right rear flasher
- 50: storage box (additional storage member)
- 52: tank cover
- 55: storage member

## Claims

1. A straddle-type vehicle comprising:
a fuel tank (51); and
a tank cover (52) attached to the fuel tank (51);
an openable and closable seat (15);
a rear wheel (9) disposed below the seat (15);
a storage member (55) which comprises an opening (55i) and at least a portion of which is disposed below the seat (15) and above the rear wheel (9);
a body cover (19) which is disposed below the seat (15) and comprises a lower edge (22B) at least a portion of which is disposed above an upper end (9t) of the rear wheel (9);
a tail light (30) disposed at the body cover (19); and
a left rear flasher (41) and a right rear flasher (42) which are disposed at the body cover (19),
wherein the fuel tank (51) is disposed forward of the storage member (55),
wherein the seat (15) is located over the opening (55i) of the storage member (55) when the seat (15) is closed, and the seat (15) is not located over at least a portion of the opening (55i) of the storage member (55) when the seat (15) is opened,
wherein the body cover (19) comprises a rear cover (25) disposed above the tail light (30) and between the left rear flasher (41) and the right rear flasher (42) in a rear view of the vehicle,
wherein at least a portion of the tail light (30) is disposed below the left rear flasher (41) and the right rear flasher (42),
wherein a left end (30l) of the tail light (30) is disposed leftward of a right end (41 b) of the left rear flasher (41),
wherein a right end (30r) of the tail light (30) is disposed rightward of a left end (42b) of the right rear flasher (42), and
wherein at least a portion of the storage member (55) is disposed so as to be overlapped with the rear cover (25) in a plan view of the vehicle, and overlapped with the left rear flasher (41) and the right rear flasher (42) in a side view of the vehicle, **characterized in that**
the fuel tank (51) is disposed below the seat (15) and the storage member (55) and the tank cover (52) are integral with each other.

2. A straddle-type vehicle according to claim 1, **characterized in that** a dimension (41W) of each of the left rear flasher (41) and the right rear flasher (42) in a vehicle width direction and a dimension (41 H) of each of the left rear flasher (41) and the right rear flasher (42) in a vehicle vertical direction are each smaller than a dimension (41 N) of each of the left rear flasher (41) and the right rear flasher (42) in a vehicle front-rear direction, and/or
a dimension (41 H) of each of the left rear flasher (41) and the right rear flasher (42) in a vehicle vertical direction is smaller than a dimension (41W) of each of the left rear flasher (41) and the right rear flasher (42) in a vehicle width direction, and/or
a dimension (30H) of the tail light (30) in a vehicle vertical direction is smaller than a dimension (30W) of the tail light (30) in a vehicle width direction.

3. A straddle-type vehicle according to claim 1 or 2, **characterized in that** the body cover (19) comprises: an upper side cover (21) disposed below the seat (15); and a lower side cover (22) disposed below the upper side cover (21), and
wherein the lower side cover (22) is assembled so as to be attachable to and detachable from the upper side cover (21).

4. A straddle-type vehicle according to any one of claims 1 to 3, **characterized in that** an upper end (30t) of the tail light (30) is disposed below a lower end (41 b) of the left rear flasher (41) and a lower end (42b) of the right rear flasher (42) in the rear view of the vehicle, and/or the left end (30l) of the tail light (30) is disposed rightward of a left end (411) of the left rear flasher (41), and
wherein the right end (30r) of the tail light (30) is disposed leftward of a right end (42r) of the right rear flasher (42), and/or
front ends (30l, 30r) of the tail light (30) are disposed forward of a rear end (41 b) of the left rear flasher (41) and a rear end (42b) of the right rear flasher (42).

5. A straddle-type vehicle according to any one of claims 1 to 4, **characterized in that** a rear end (55b) of the storage member (55) is disposed rearward of a front end (30f) of the tail light (30).

6. A straddle-type vehicle according to any one of claims 1 to 5, **characterized in that** the tail light (30) extends obliquely upward and rearward in the side view of the vehicle.

7. A straddle-type vehicle according to any one of claims 1 to 6, **characterized in that** in the rear view of the vehicle, a right edge (41 R) of the left rear flasher (41) extends obliquely downward and rightward, and a left edge (42L) of the right rear flasher (42) extends obliquely downward and leftward.

8. A straddle-type vehicle according to any one of claims 1 to 7, **characterized in that** in the side view of the vehicle, the rear cover (25) comprises: a first rear edge (25p) that extends obliquely downward and rearward; a second rear edge (25q) that extends downward from the first rear edge (25p); and a third rear edge (25r) that extends obliquely downward and rearward from the second rear edge (25q), and
wherein in the side view of the vehicle, a lower end (25p1) of the first rear edge (25p) is located above a line (L1) through which a lower end (25r1) of the third rear edge (25r) and an upper end (25r2) of the third rear edge (25r) are connected to each other.

9. A straddle-type vehicle according to any one of claims 1 to 8, **characterized in that** the storage member (55) comprises: a bottom plate (55D); a front plate (55F) that extends upward from the bottom plate (55D); and a rear plate (55B) that extends upward from the bottom plate (55D) and is disposed rearward of the front plate (55F).

10. A straddle-type vehicle according to claim 9, **characterized in that** the rear plate (55B) extends obliquely upward and rearward, and/or
an upper end portion of the rear plate (55B) is bent so as to be extended rearward and then downward, and/or
the rear plate (55B) overlaps with the rear cover (25) in the plan view of the vehicle, and/or at least a portion of the front plate (55F) is disposed forward of the rear cover (25).

11. A straddle-type vehicle according to claim 9 or 10, **characterized by** a body frame (3D) disposed below the seat (15) and above the rear wheel (9),
wherein the storage member (55) comprises a support portion (52f) located forward of the front plate (55F) and above the bottom plate (55D), the storage member (55) being supported by the body frame (3D) via the support portion (52f) in a cantilever manner.

12. A straddle-type vehicle according to any one of claims 1 to 11, **characterized by:**
an additional storage member (50) disposed below the seat (15) and forward of the storage member (55); and
a seal member (53) interposed between the seat (15) and the additional storage member (50).

13. A straddle-type vehicle according to any one of claims 1 to 12, **characterized by** a grab bar (35) that comprises:
a left bar (35L) disposed leftward of the seat (15);
a right bar (35R) disposed rightward of the seat (15); and
a rear bar (35B) that runs between the left bar (35L) and the right bar (35R) and is located rearward of the seat (15) and above the left bar (35L) and the right bar (35R), wherein a rear end (55b) of the storage member (55) is located rearward of a front end (35Bf) of the rear bar (35B).

14. A straddle-type vehicle according to any one of claims 1 to 13, **characterized in that** the straddle-type vehicle is a scooter.

## Patentansprüche

1. Ein Grätsch-Sitz-Typ-Fahrzeug, das umfasst:
einen Kraftstoff-Tank (51); und
eine Tank-Abdeckung (52), angebracht an dem Kraftstoff-Tank (51);
einen öffenbaren und schließbaren Sitz (15);
ein Hinter-Rad (9), angeordnet unter dem Sitz (15);
ein Stau-Element (55), das eine Öffnung (55i) umfasst und zumindest ein Abschnitt derselben ist unterhalb des Sitz (15) und oberhalb des Hinter-Rads (9) positioniert;
eine Körper-Abdeckung (19), die unterhalb des Sitz (15) positioniert ist und eine untere Kante (22b) umfasst, zumindest ein Abschnitt derselben ist oberhalb eines oberen Endes (9t) des Hinter-Rads (9) positioniert;
ein Rücklicht (30), positioniert an der Körper-Abdeckung (19); und
ein linker hinterer Blinker (41) und ein rechter hinterer Blinker (42), die an der Körper-Abdeckung (19) positioniert sind, wobei der Kraftstoff-Tank (51) vor dem Stau-Element (55) positioniert ist, wobei der Sitz (15) über der Öffnung (55i) des Stau-Elements (55) positioniert ist wenn der Sitz (15) geschlossen ist, und der Sitz (15) ist nicht über zumindest einem Abschnitt der Öffnung (55i) des Stau-Elements (55) angeordnet, wenn der Sitz (15) geöffnet ist, wobei die Körper-Abdeckung (19) eine hintere Abdeckung (25) umfasst, die oberhalb des Rücklichts (30) und zwischen dem linken hinteren Blinker (41) und dem rechten hinteren Blinker (42) in einer Rückansicht des Fahrzeugs positioniert ist,
wobei zumindest ein Abschnitt des Rücklichts (30) unterhalb des linken hinteren Blinkers (41) und des rechten hinteren Blinkers (42) positioniert ist,
wobei ein linkes Ende (30i) des Rücklichts (30) links von einem rechten Ende (41 b) des linken hinteren Blinkers (41) positioniert ist,
wobei ein rechtes Ende (30r) des Rücklichts (30) rechts von einem linken Ende (42b) des rechten hinteren Blinkers (42) positioniert ist, und
wobei zumindest ein Abschnitt des Stau-Elements (55) positioniert ist, so dass dieses mit der hinteren Abdeckung (25) in einer Draufsicht des Fahrzeugs überlappt und mit dem linken hinteren Blinker (41) und dem rechten hinteren Blinker (42) in einer Seitenansicht des Fahrzeugs überlappt, **dadurch gekennzeichnet, dass** der Kraftstoff-Tank (51) unterhalb des Sitz (15) positioniert ist und das Stau-Element (55) und die Tank-Abdeckung (42) sind integral miteinander.

2. Ein Grätsch-Sitz-Typ-Fahrzeug gemäß Anspruch 1, **dadurch gekennzeichnet, dass** eine Abmessung (41W) von jedem dem linken hinteren Blinker (41) und dem rechten hinteren Blinker (42) in der Fahrzeug-Breiten-Richtung und eine Abmessung (41 H) von jedem dem linken hinteren Blinker (41) und dem rechten hinteren Blinker (42) in einer Fahrzeug-Vertikal-Richtung jede kleiner sind als eine Abmessung (41 N) von jedem dem linken hinteren Blinker (41) und dem rechten hinteren Blinker (42) in einer Fahrzeug-Vorder-Rück-Richtung und/oder
eine Abmessung (41 H) von jedem dem linken hinteren Blinker (41) und dem rechten hinteren Blinker (42) in der Fahrzeug-Vertikal-Richtung ist kleiner als eine Abmessung (41W) von jedem dem linken hinteren Blinker (41) und dem rechten hinteren Blinker (42) in einer Fahrzeug-Breiten-Richtung und/oder eine Abmessung (30H) des Rücklichts (30) in einer Fahrzeug-Vertikal-Richtung ist kleiner als eine Abmessung (30W) des Rücklichts in einer Fahrzeug-Breiten-Richtung.

3. Ein Grätsch-Sitz-Typ-Fahrzeug gemäß Anspruch 1 oder 2, **dadurch gekennzeichnet, dass** die Körper-Abdeckung (19) umfasst:
eine obere Seitenabdeckung (21), positioniert unter dem Sitz (15); und eine untere Seitenabdeckung (22), positioniert unter der oberen Seitenabdeckung (21), und
wobei die untere Seitenabdeckung (22) zusammengesetzt ist, sodass diese anbringbar und entfernbar von der oberen Seitenabdeckung (21) ist.

4. Ein Grätsch-Sitz-Typ-Fahrzeug gemäß irgendeinem der Ansprüche 1 bis 3, **dadurch gekennzeichnet, dass** ein oberes Ende (30t) des Rücklichts (30) unter einem unteren Ende (41b) des linken hinteren Blinkers (41) und einem unteren Ende (42b) des rechten hinteren Blinkers (42) in einer Rückansicht des Fahrzeugs positioniert ist, und/oder das linke Ende (30l) des Rücklichts (30) ist rechts von einem linken Ende (41l) des linken hinteren Blinkers (41) angeordnet, und
wobei das rechte Ende (30r) des Rücklichts links von einem rechten Ende (42r) des rechten hinteren Blinkers (42) angeordnet ist, und/oder
Vorder-Enden (30l, 30r) des Rücklichts (30) sind vor einem hinteren Ende (41 b) des linken hinteren Blinkers (41) und einem hinteren Ende (42b) des rechten hinteren Blinkers (42) angeordnet.

5. Ein Grätsch-Sitz-Typ-Fahrzeug gemäß irgendeinem der Ansprüche 1 bis 4, **dadurch gekennzeichnet, dass** ein hinteres Ende (55b) des Stau-Elements (55) hinter einem vorderen Ende (30f) des Rücklichts (30) angeordnet ist.

6. Ein Grätsch-Sitz-Typ-Fahrzeug gemäß irgendeinem der Ansprüche 1 bis 5, **dadurch gekennzeichnet, dass** das Rücklicht (30) sich schräg nach oben und hinten in der Seitenansicht des Fahrzeugs erstreckt.

7. Ein Grätsch-Sitz-Typ-Fahrzeug gemäß irgendeinem der Ansprüche 1 bis 6, **dadurch gekennzeichnet, dass** in der Rückansicht des Fahrzeugs eine rechte Kante (41 r) des linken hinteren Blinkers (41) sich schräg nach unten und rechts erstreckt, und eine linke Kante (42l) des rechten hinteren Blinkers (42) sich schräg nach unten und links erstreckt.

8. Ein Grätsch-Sitz-Typ-Fahrzeug gemäß irgendeinem der Ansprüche 1 bis 7, **dadurch gekennzeichnet, dass** in der Seitenansicht des Fahrzeugs die hintere Abdeckung (25) umfasst: eine erste hintere Kante (25p), die sich schräg nach unten und hinten erstreckt; eine zweite hintere Kante (25q), die sich nach unten von der ersten hinteren Kante (25p) erstreckt; und eine dritte hintere Kante (25r), die sich schräg nach unten und hinten von der zweiten hinteren Kante (25q) erstreckt, und wobei in der Seitenansicht des Fahrzeugs ein unteres Ende (25p1) der ersten hinteren Kante (25p) oberhalb einer Linie (L1) angeordnet ist durch welche ein unteres Ende (25r1) der dritten hinteren Kante (25r) und ein oberes Ende (25r2) der dritten hinteren Kante (25r) miteinander verbunden sind.

9. Ein Grätsch-Sitz-Typ-Fahrzeug gemäß irgendeinem der Ansprüche 1 bis 8, **dadurch gekennzeichnet, dass** das Stau-Element (55) umfasst: eine Bodenplatte (55d); eine Frontplatte (55f), die sich nach oben von der Bodenplatte (55d) erstreckt; und eine Rückplatte (55b), die sich von oben von der Bodenplatte (55d) erstreckt und hinter der Frontplatte (55f) positioniert ist.

10. Ein Grätsch-Sitz-Typ-Fahrzeug gemäß Anspruch 9, **dadurch gekennzeichnet, dass** die Rückplatte (55b) sich schräg nach oben und hinten erstreckt, und/oder ein oberer Endabschnitt der Rückplatte (55b) gebogen ist, so dass dieser sich nach hinten und dann nach unten erstreckt, und/oder
die Rückplatte (55b) überlappt mit der hinteren Abdeckung (25) in der Draufsicht des Fahrzeugs, und/oder zumindest ein Abschnitt der Frontplatte (55f) ist vor der hinteren Abdeckung (25) positioniert.

11. Ein Grätsch-Sitz-Typ-Fahrzeug gemäß Anspruch 9 oder 10, **gekennzeichnet durch** einen Körper-Rahmen (3D), positioniert unter dem Sitz (15) und oberhalb des Hinter-Rads (9), wobei das Stau-Element (55) einen Lagerabschnitt (52f) umfasst, der vor der Frontplatte (55f) und oberhalb der Bodenplatte (55d) angeordnet ist, das Stau-Element (55) ist **durch** den Körper-Rahmen (3d) über dem Lagerabschnitt (52f) in einer auskragenden Weise gelagert.

12. Ein Grätsch-Sitz-Typ-Fahrzeug gemäß irgendeinem der Ansprüche 1 bis 11,
**gekennzeichnet durch:**
ein zusätzliches Stau-Element (50), angeordnet unter dem Sitz (15) und vor dem Stau-Element (55); und
ein Dichtungselement (53) zwischengesetzt zwischen den Sitz (15) und dem zusätzlichen Stau-Element (50).

13. Ein Grätsch-Sitz-Typ-Fahrzeug gemäß irgendeinem der Ansprüche 1 bis 12,
**gekennzeichnet durch** eine Griffstange (35), die umfasst:
eine linke Stange (35L), angeordnet links von dem Sitz (15);
eine rechte Stange (35R), angeordnet rechts von dem Sitz (15); und
eine hintere Stange (35B), die zwischen der linken Stange (35l) und der rechten Stange (35r) verläuft und hinter dem Sitz (15) und oberhalb der linken Stange (35L) und der rechten Stange (35R) angeordnet ist, wobei ein hinteres Ende (55b) des Stau-Element (55) hinter einem vorderen Ende (35bf) der hinteren Stange (35B) angeordnet ist.

14. Ein Grätsch-Sitz-Typ-Fahrzeug gemäß irgendeinem der Ansprüche 1 bis 13, **dadurch gekennzeichnet, dass** das Grätsch-Sitz-Typ-Fahrzeug ein Scooter ist.

## Revendications

1. Véhicule à selle comprenant :
un réservoir de carburant (51) ; et
un capot de réservoir (52) fixé au réservoir de carburant (51) ;
un siège pouvant s'ouvrir et se fermer (15) ;
une roue arrière (9) disposée en-dessous du siège (15) ;
un élément de stockage (55) qui comprend une ouverture (55i) et dont au moins une partie est disposée en-dessous du siège (15) et au-dessus de la roue arrière (9) ;
un capot de carrosserie (19) qui est disposé en-dessous du siège (15) et qui comprend un bord inférieur (22B) dont au moins une partie est disposée au-dessus d'une extrémité supérieure (9t) de la roue arrière (9) ;
un feu arrière (30) disposé au niveau du capot de carrosserie (19) ; et
un clignotant arrière gauche (41) et un clignotant arrière droit (42) qui sont disposés au niveau du capot de carrosserie (19),
où le réservoir de carburant (51) est disposé vers l'avant de l'élément de stockage (55),
où le siège (15) est situé par-dessus l'ouverture (55i) de l'élément de stockage (55) lorsque le siège (15) est fermé, et le siège (15) n'est pas situé par-dessus au moins une partie de l'ouverture (55i) de l'élément de stockage (55) lorsque le siège (15) est ouvert,
où le capot de carrosserie (19) comprend un capot arrière (25) disposé au-dessus du feu arrière (30) et entre le clignotant arrière gauche (41) et le clignotant arrière droit (42) en vue arrière du véhicule,
où au moins une partie du feu arrière (30) est disposée en-dessous du clignotant arrière gauche (41) et du clignotant arrière droit (42),
où une extrémité gauche (301) du feu arrière (30) est disposée à gauche d'une extrémité droite (41b) du clignotant arrière gauche (41),
où une extrémité droite (30r) du feu arrière (30) est disposée à droite d'une extrémité gauche (42b) du clignotant arrière droit (42), et
où au moins une partie de l'élément de stockage (55) est disposée afin d'être recouverte par le capot arrière (25) en une vue en plan du véhicule, et recouverte du clignotant arrière gauche (41) et du clignotant arrière droit (42) en une vue latérale du véhicule, **caractérisé en ce que**
le réservoir de carburant (51) est disposé en-dessous du siège (15) et que l'élément de stockage (55) et que le capot de réservoir (52) sont intégrés l'un à l'autre.

2. Véhicule à selle selon la revendication 1, **caractérisé en ce qu**'une dimension (41W) de chacun du clignotant arrière gauche (41) et du clignotant arrière droit (42) dans un sens de la largeur du véhicule et une dimension (41H) de chacun du clignotant arrière gauche (41) et du clignotant arrière droit (42) dans un sens vertical du véhicule sont chacune plus petites qu'une dimension (41N) de chacun du clignotant arrière gauche (41) et du clignotant arrière droit (42) dans un sens de l'avant vers l'arrière du véhicule, et/ou
une dimension (41H) de chacun du clignotant arrière gauche (41) et du clignotant arrière droit (42) dans un sens vertical du véhicule est plus petite qu'une dimension (41W) de chacun du clignotant arrière gauche (41) et du clignotant arrière droit (42) dans un sens de la largeur du véhicule, et/ou
une dimension (30H) du feu arrière (30) dans un sens vertical du véhicule est plus petite qu'une dimension (30W) du feu arrière (30), dans un sens de la largeur du véhicule.

3. Véhicule à selle selon la revendication 1 ou 2, **caractérisé en ce que** le capot de carrosserie (19) comprend : un capot latéral supérieur (21) disposé en-dessous du siège (15) ; et un capot latéral inférieur (22) disposé en-dessous du capot latéral supérieur (21), et
où le capot latéral inférieur (22) est assemblé afin de pouvoir être fixé à et détachable du capot latéral supérieur (21).

4. Véhicule à selle selon l'une quelconque des revendications 1 à 3, **caractérisé en ce qu**'une extrémité supérieure (30t) du feu arrière (30) est disposée en-dessous d'une extrémité inférieure (41b) du clignotant arrière gauche (41) et d'une extrémité inférieure (42b) du clignotant arrière droit (42) en vue arrière du véhicule, et/ou qu'extrémité gauche (301) du feu arrière (30) est disposée du côté droit d'une extrémité gauche (411) du clignotant arrière gauche (41), et
où l'extrémité droite (30r) du feu arrière (30) est disposée du côté gauche d'une extrémité droite (42r) du clignotant arrière droit (42), et/ou
les extrémités avant (30l, 30r) du feu arrière (30) sont disposées à l'avant d'une extrémité arrière (41b) du clignotant arrière gauche (41) et d'une extrémité arrière (42b) du clignotant arrière droit (42).

5. Véhicule à selle selon l'une quelconque des revendications 1 à 4, **caractérisé en ce qu'**une extrémité arrière (55b) de l'élément de stockage (55) est disposée à l'arrière d'une extrémité avant (30f) du feu arrière (30).

6. Véhicule à selle selon l'une quelconque des revendications 1 à 5, **caractérisé en ce que** le feu arrière (30) s'étend obliquement vers le haut et vers l'arrière en vue latérale du véhicule.

7. Véhicule à selle selon l'une quelconque des revendications 1 à 6, **caractérisé en ce qu**'en vue arrière du véhicule, un bord droit (41R) du clignotant arrière gauche (41) s'étend obliquement vers le bas et vers la droite, et qu'un bord gauche (42L) du clignotant arrière droit (42) s'étend obliquement vers le bas et vers la gauche.

8. Véhicule à selle selon l'une quelconque des revendications 1 à 7, **caractérisé en ce qu**'en vue latérale du véhicule, le capot arrière (25) comprend : un premier bord arrière (25p) qui s'étend obliquement vers le bas et vers l'arrière ; un second bord arrière (25q) qui s'étend vers le bas depuis le premier bord arrière (25p) ; et un troisième bord arrière (25r) qui s'étend obliquement vers le bas et vers l'arrière du second bord arrière (25q), et
où en vue latérale du véhicule, une extrémité inférieure (25p1) du premier bord arrière (25p) est située au-dessus d'une ligne (L1) à travers laquelle une extrémité inférieure (25r1) du troisième bord arrière (25r) et une extrémité supérieure (25r2) du troisième bord arrière (25r) sont connectées l'une à l'autre.

9. Véhicule à selle selon l'une quelconque des revendications 1 à 8, **caractérisé en ce que** l'élément de stockage (55) comprend : une plaque inférieure (55D) ; une plaque avant (55F) qui s'étend vers le haut depuis la plaque inférieure (55D) ; et une plaque arrière (55B) qui s'étend vers le haut depuis la plaque inférieure (55D) et qui est disposée à l'arrière de la plaque avant (55F).

10. Véhicule à selle selon la revendication 9, **caractérisé en ce que** la plaque arrière (55B) s'étend obliquement vers le haut et vers l'arrière, et/ou
une partie d'extrémité supérieure de la plaque arrière (55B) est coudée afin de s'étendre vers l'arrière et ensuite vers le bas, et/ou
la plaque arrière (55B) chevauche le capot arrière (25) en une vue en plan du véhicule, et/ou au moins une partie de la plaque avant (55F) est disposée à l'avant du capot arrière (25).

11. Véhicule à selle selon la revendication 9 ou 10, **caractérisé par** un châssis de carrosserie (3D) disposé en-dessous du siège (15) et au-dessus de la roue arrière (9),
où l'élément de stockage (55) comprend une partie formant support (52f) située à l'avant de la plaque avant (55F) et au-dessus de la plaque inférieure (55D), l'élément de stockage (55) étant supporté par le châssis de carrosserie (3D) via la partie formant support (52f) en porte-à-faux.

12. Véhicule à selle selon l'une quelconque des revendications 1 à 11, **caractérisé par :** un élément de stockage supplémentaire (50) disposé en-dessous du siège (15) et à l'avant de l'élément de stockage (55) ; et
un élément d'étanchéité (53) interposé entre le siège (15) et l'élément de stockage supplémentaire (50).

13. Véhicule à selle selon l'une quelconque des revendications 1 à 12, **caractérisé par** une barre d'appui (35) qui comprend :
une barre gauche (35L) disposée côté gauche du siège (15) ;
une barre droite (35R) disposée côté droit du siège (15) ; et
une barre arrière (35B) courant entre la barre gauche (35L) et la barre droite (35R) et qui est située à l'arrière du siège (15) et au-dessus de la barre gauche (35L) et de la barre droite (35R),
où une extrémité arrière (55b) de l'élément de stockage (55) est située à l'arrière d'une extrémité avant (35Bf) de la barre arrière (35B).

14. Véhicule à selle selon l'une quelconque des revendications 1 à 13, **caractérisé en ce que** le véhicule à selle est un scooter.
